# EUROPEAN PATENT APPLICATION

(11) **EP 3 079 392 A1**
(43) Date of publication of application: **12.10.2016**
(21) Application number: 14876188.5
(22) Date of filing: 25.06.2014
(51) Int. Cl.: H04W 12/06, H04L 29/06

(54) **METHOD, APPARATUS AND SYSTEM FOR SELECTING AUTHENTICATION ALGORITHM**

(30) Priority: 31.12.2013 CN 201310754492
(71) Applicant: Huawei Technologies Co., Ltd., Longgang District Shenzhen, Guangdong 518129 (CN)
(72) Inventor: GAN, Lu, Shenzhen Guangdong 518129 (CN); HE, Chengdong, Shenzhen Guangdong 518129 (CN)
(74) Representative: Maiwald Patentanwalts GmbH
(86) International application number: PCT/CN2014/080736
(87) International publication number: WO 2015/100975

(57) **Abstract**

Embodiments of the present invention disclose a method for selecting an authentication algorithm, including: receiving, by a serving device, an authentication data request massage sent by a control device; selecting, by the serving device, an authentication algorithm according to the authentication data request message and information about an authentication algorithm supported by the serving device; determining, by the serving device, identification information of the authentication algorithm according to the selected authentication algorithm; and sending, by the serving device, the identification information of the authentication algorithm to the control device. The embodiments of the present invention further disclose an apparatus and system for selecting an authentication algorithm. The embodiments of the present invention have advantages of improving diversity of methods for selecting an authentication algorithm, improving terminal utilization, and enhancing user experience of terminal authentication.

## Description

### TECHNICAL FIELD

The present invention relates to the field of communications technologies, and in particular, to a method, apparatus, and system for selecting an authentication algorithm.

### BACKGROUND

A proximity service (Proximity Service, ProSe) technology is mainly used to establish a secure communications channel between two user terminals (User Equipment, UE) that are relatively close in distance, so that data can be securely exchanged when the two UEs perform end-to-end data transmission. In the ProSe technology, when establishing the communications channel, the two UEs require support from a subscription network. UE needs to pass network authentication before accessing a network, and further establishes a communications channel with another UE.

In the prior art, when a network performs authentication on UE, the UE and a home subscriber server (Home Subscriber Server, HSS) mainly use a Milenage algorithm to generate an authentication parameter and a key that are required for authentication. However, with emergence of a new authentication algorithm, that is, a Tuak algorithm, UE or an HSS that has a different authentication capability accordingly appears, including UE or an HSS that supports only one authentication algorithm, or UE or an HSS that supports multiple authentication algorithms. As a result, when UE and an HSS that have different authentication capabilities perform authentication together, which authentication algorithm is specifically used to perform authentication cannot be determined, or only the Milenage algorithm can be used to perform authentication on the UE. In the prior art, the UE and the HSS cannot select, according to an authentication algorithm supported by the UE or the HSS, a corresponding authentication algorithm to perform authentication on the UE, or even if the UE or the HSS supports multiple authentication algorithms, only the Milenage algorithm can be used to perform authentication on the UE. Therefore, the authentication algorithm is monotonous in form, few authentication algorithms can be selected, resource utilization of a terminal (including the UE and the HSS) is low, and a user experience effect of UE authentication is poor.

### SUMMARY

According to a method, apparatus, and system for selecting an authentication algorithm provided in embodiments of the present invention, a corresponding authentication algorithm may be selected according to an authentication algorithm supported by a user equipment and that supported by a serving device, and identification information of the authentication algorithm may be determined according to the selected authentication algorithm, which improves diversity of choices of authentication algorithms, improves utilization of terminal resources, and enhances user experience of user equipment authentication.

A first aspect of the embodiments of the present invention provides a method for selecting an authentication algorithm, where the method may include:
receiving, by a serving device, an authentication data request message sent by a control device, where the authentication data request message carries information about an authentication algorithm supported by a user equipment;
selecting, by the serving device, an authentication algorithm according to the authentication data request message and information about an authentication algorithm supported by the serving device;
determining, by the serving device, identification information of the authentication algorithm according to the selected authentication algorithm; and
sending, by the serving device, the identification information of the authentication algorithm to the control device, so that the control device sends the identification information of the authentication algorithm to the user equipment.

With reference to the first aspect, in a first possible implementation manner, the identification information that is of the authentication algorithm and is carried in the authentication data request message includes: a Tuak algorithm supported by the user equipment, and/or a Milenage algorithm supported by the user equipment; and
the selecting, by the serving device, an authentication algorithm according to the authentication data request message and information about an authentication algorithm supported by the serving device includes:
selecting, by the serving device from the authentication algorithm supported by the user equipment and the authentication algorithm supported by the serving device, an authentication algorithm supported by both the user equipment and the serving device, and setting the authentication algorithm as the selected authentication algorithm; where
the authentication algorithm supported by the serving device includes: the Tuak algorithm, and/or the Milenage algorithm.

With reference to the first aspect, in a second possible implementation manner, the information, carried in the authentication data request message, about the authentication algorithm supported by the user equipment is empty;
the information about the authentication algorithm supported by the serving device includes: a Tuak algorithm supported by the serving device, and/or a Milenage algorithm supported by the serving device; and
the selecting, by the serving device, an authentication algorithm according to the authentication data request message and information about an authentication algorithm supported by the serving device includes:
selecting, by the serving device, the Milenage algorithm from the authentication algorithm supported by the serving device, and setting the Milenage algorithm as the selected authentication algorithm.

With reference to the first possible implementation manner of the first aspect, in a third possible implementation manner, the identification information of the authentication algorithm is specifically an authentication vector used to authenticate the user equipment; and
when the serving device sets the Tuak algorithm as the selected authentication algorithm, the determining, by the serving device, identification information of the authentication algorithm according to the selected authentication algorithm includes:
selecting, by the serving device from a preset authentication management field AMF parameter, a flag bit of an authentication algorithm used to authenticate the user equipment, and setting the flag bit to a first identifier, where the first identifier is used as identification information of the Tuak algorithm; and
generating, by the serving device according to the AMF parameter and the Tuak algorithm, the authentication vector used to authenticate the user equipment.

With reference to the first possible implementation manner of the first aspect or the second possible implementation manner of the first aspect, in a fourth possible implementation manner, the identification information of the authentication algorithm is specifically an authentication vector used to authenticate the user equipment; and
when the serving device sets the Milenage algorithm as the selected authentication algorithm, the determining, by the serving device, identification information of the authentication algorithm according to the selected authentication algorithm includes:
selecting, by the serving device from a preset AMF parameter, a flag bit of an authentication algorithm used to authenticate the user equipment, and setting the flag bit to a second identifier, where the second identifier is used as identification information of the Milenage algorithm; and
generating, by the serving device according to the AMF parameter and the Milenage algorithm, the authentication vector used to authenticate the user equipment.

A second aspect of the embodiments of the present invention provides a method for selecting an authentication algorithm, where the method may include:
sending, by a user equipment to a control device, information about an authentication algorithm supported by the user equipment;
receiving, by the user equipment, a user authentication request message sent by the control device; and
determining, by the user equipment, an authentication algorithm according to the user authentication request message, and performing authentication on the network according to the authentication algorithm.

With reference to the second aspect, in a first possible implementation manner, the information about the authentication algorithm supported by the user equipment includes: a Tuak algorithm supported by the user equipment, and/or a Milenage algorithm supported by the user equipment; and
the determining, by the user equipment, an authentication algorithm according to the user authentication request message includes:
parsing, by the user equipment, the user authentication request message, to acquire identification information that is of an authentication algorithm and is included in the user authentication request message; and
determining, by the user equipment, the authentication algorithm according to the identification information.

With reference to the first possible implementation manner of the second aspect, in a second possible implementation manner, the user authentication request message includes an authentication parameter used to authenticate the user equipment; where
the authentication parameter used to authenticate the user equipment includes an AUTN parameter, and the AUTN parameter includes an AMF parameter; and
the identification information of the authentication algorithm includes: a first identifier or a second identifier of a flag bit that is of the authentication algorithm and is included in the AMF parameter.

With reference to the second possible implementation manner of the second aspect, in a third possible implementation manner, the determining, by the user equipment, the authentication algorithm according to the identification information includes:
when the identification information is the first identifier of the flag bit, in the AMF parameter, of an authentication algorithm used to authenticate the user equipment, setting, by the user equipment, the Tuak algorithm supported by the user equipment as the authentication algorithm; or
when the identification information is the second identifier of the flag bit, in the AMF parameter, of an authentication algorithm used to authenticate the user equipment, setting, by the user equipment, the Milenage algorithm supported by the user equipment as the authentication algorithm.

With reference to the second aspect, in a fourth possible implementation manner, the information about the authentication algorithm supported by the user equipment is empty; and
the determining, by the user equipment, an authentication algorithm according to the user authentication request message includes:
setting, by the user equipment according to the user authentication request message, a Milenage algorithm supported by the user equipment as the authentication algorithm.

A third aspect of the embodiments of the present invention provides a method for selecting an authentication algorithm, where the method may include:
receiving, by a control device, information that is sent by a user equipment and is about an authentication algorithm supported by the user equipment;
sending, by the control device, an authentication data request message to a serving device, where the authentication data request message carries the information about the authentication algorithm supported by the user equipment;
receiving, by the control device, identification information that is of an authentication algorithm and is sent by the serving device, where the identification information of the authentication algorithm is corresponding to the authentication data request message; and
sending, by the control device, a user authentication request message to the user equipment, where the user authentication request message carries the identification information of the authentication algorithm.

With reference to the third aspect, in a first possible implementation manner, the information about the authentication algorithm supported by the user equipment includes: a Tuak algorithm supported by the user equipment, and/or a Milenage algorithm supported by the user equipment, or the information about the authentication algorithm supported by the user equipment is empty.

With reference to the third aspect or the first possible implementation manner of the third aspect, in a second possible implementation manner, the identification information that is of the authentication algorithm and is sent by the serving device includes: identification information corresponding to the Tuak algorithm selected by the serving device, and/or identification information corresponding to the Milenage algorithm selected by the serving device, or the information about the authentication algorithm supported by the user equipment is empty.

A fourth aspect of the embodiments of the present invention provides a serving device for selecting an authentication algorithm, where the serving device may include:
a receiving module, configured to receive an authentication data request message sent by a control device, where the authentication data request message carries information about an authentication algorithm supported by a user equipment;
a selection module, configured to select an authentication algorithm according to the authentication data request message received by the receiving module and information about an authentication algorithm supported by the serving device;
a processing module, configured to determine identification information of the authentication algorithm according to the authentication algorithm selected by the selection module; and
a sending module, configured to send the identification information of the authentication algorithm to the control device, so that the control device sends the identification information of the authentication algorithm to the user equipment.

With reference to the fourth aspect, in a first possible implementation manner, the identification information that is of the authentication algorithm and is carried in the authentication data request message received by the receiving module includes: a Tuak algorithm supported by the user equipment, and/or a Milenage algorithm supported by the user equipment; and
the selection module is specifically configured to:
select, from the authentication algorithm supported by the user equipment and the authentication algorithm supported by the serving device, an authentication algorithm supported by both the user equipment and the serving device, and set the authentication algorithm as the selected authentication algorithm; where
the authentication algorithm supported by the serving device includes: the Tuak algorithm, and/or the Milenage algorithm.

With reference to the first possible implementation manner of the fourth aspect, in a second possible implementation manner, the information, carried in the authentication data request message received by the receiving module, about the authentication algorithm supported by the user equipment is empty;
the information about the authentication algorithm supported by the serving device includes: the Tuak algorithm supported by the serving device, and/or the Milenage algorithm supported by the serving device; and
the selection module is specifically configured to:
select, by the serving device, the Milenage algorithm from the authentication algorithm supported by the serving device, and set the Milenage algorithm as the selected authentication algorithm.

With reference to the first possible implementation manner of the fourth aspect, in a third possible implementation manner, the identification information that is of the authentication algorithm and is determined by the processing module is specifically an authentication vector used to authenticate the user equipment; and
when the selection module sets the Tuak algorithm as the selected authentication algorithm, the processing module is specifically configured to:
select, from a preset AMF parameter, a flag bit of an authentication algorithm used to authenticate the user equipment, and set the flag bit to a first identifier, where the first identifier is used as identification information of the Tuak algorithm; and
generate, according to the AMF parameter and the Tuak algorithm, the authentication vector used to authenticate the user equipment.

With reference to the first possible implementation manner of the fourth aspect or the second possible implementation manner of the fourth aspect, in a fourth possible implementation manner, the identification information that is of the authentication algorithm and is determined by the processing module is specifically an authentication vector used to authenticate the user equipment; and
when the selection module sets the Milenage algorithm as the selected authentication algorithm, the processing module is specifically configured to:
select, from a preset AMF parameter, a flag bit of an authentication algorithm used to authenticate the user equipment, and set the flag bit to a second identifier, where the second identifier is used as identification information of the Milenage algorithm; and
generate, according to the AMF parameter and the Milenage algorithm, the authentication vector used to authenticate the user equipment.

A fifth aspect of the embodiments of the present invention provides user equipment for selecting an authentication algorithm, where the user equipment may include:
a sending module, configured to send, to a control device, information about an authentication algorithm supported by the user equipment;
a receiving module, configured to receive a user authentication request message sent by the control device; and
a processing module, configured to: determine an authentication algorithm according to the user authentication request message, and perform authentication on the network according to the authentication algorithm.

With reference to the fifth aspect, in a first possible implementation manner, the information that is about the authentication algorithm supported by the user equipment and is sent by the sending module includes: a Tuak algorithm supported by the user equipment, and/or a Milenage algorithm supported by the user equipment; and
the processing module is specifically configured to:
parse the user authentication request message, to acquire identification information that is of an authentication algorithm and is included in the user authentication request message; and
determine the authentication algorithm according to the identification information.

With reference to the first possible implementation manner of the fifth aspect, in a second possible implementation manner, the user authentication request message received by the receiving module includes an authentication parameter used to authenticate the user equipment;
the authentication parameter that is used to authenticate the user equipment and is received by the receiving module includes an AUTN parameter, and the AUTN parameter includes an AMF parameter; and
the identification information of the authentication algorithm includes: a first identifier or a second identifier of a flag bit that is of the authentication algorithm and is included in the AMF parameter.

With reference to the second possible implementation manner of the fifth aspect, in a third possible implementation manner, the processing module is specifically configured to:
when the identification information is the first identifier of the flag bit, in the AMF parameter, of an authentication algorithm used to authenticate the user equipment, set the Tuak algorithm supported by the user equipment as the authentication algorithm; or
when the identification information is the second identifier of the flag bit, in the AMF parameter, of an authentication algorithm used to authenticate the user equipment, set the Milenage algorithm supported by the user equipment as the authentication algorithm.

With reference to the fifth aspect, in a fourth possible implementation manner, the information, sent by the sending module, about the authentication algorithm supported by the user equipment is empty; and
the processing module is specifically configured to:
set, according to the user authentication request message, a Milenage algorithm supported by the user equipment as the authentication algorithm.

A sixth aspect of the embodiments of the present invention provides a control device for selecting an authentication algorithm, where the control device may include:
a receiving module, configured to receive information that is sent by a user equipment and is about an authentication algorithm supported by the user equipment; and
a sending module, configured to send an authentication data request message to a serving device, where the authentication data request message carries the information about the authentication algorithm supported by the user equipment; where
the receiving module is configured to receive identification information that is of an authentication algorithm and is sent by the serving device, where the identification information of the authentication algorithm is corresponding to the authentication data request message; and
the sending module is configured to send a user authentication request message to the user equipment, where the user authentication request message carries the identification information of the authentication algorithm.

With reference to the sixth aspect, in a first possible implementation manner, the information that is about the authentication algorithm supported by the user equipment and is received by the receiving module includes: a Tuak algorithm supported by the user equipment, and/or a Milenage algorithm supported by the user equipment, or the information about the authentication algorithm supported by the user equipment is empty.

With reference to the sixth aspect or the first possible implementation manner of the sixth aspect, in a second possible implementation manner, the identification information that is of the authentication algorithm and is received by the receiving module includes: identification information corresponding to the Tuak algorithm selected by the serving device, and/or identification information corresponding to the Milenage algorithm selected by the serving device, or the information about the authentication algorithm supported by the user equipment is empty.

A seventh aspect of the embodiments of the present invention provides a system for selecting an authentication algorithm, where the system may include: the foregoing serving device provided in the fourth aspect of the embodiments of the present invention, the foregoing user equipment provided in the fifth aspect of the embodiments of the present invention, and the foregoing control device provided in the embodiments of the present invention.

In the embodiments of the present invention, a corresponding authentication algorithm is selected according to an authentication algorithm supported by a user equipment and that supported by a serving device, and then information such as an authentication vector required for authentication is generated, which improves diversity of choices of authentication algorithms, improves utilization of terminal resources, and enhances user experience of user equipment authentication.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a first embodiment of a method for selecting an authentication algorithm according to an embodiment of the present invention;
FIG. 2 is a first schematic interaction diagram of a method for selecting an authentication algorithm according to an embodiment of the present invention;
FIG. 3 is a second schematic interaction diagram of a method for selecting an authentication algorithm according to an embodiment of the present invention;
FIG. 4 is a third schematic interaction diagram of a method for selecting an authentication algorithm according to an embodiment of the present invention;
FIG. 5 is a schematic flowchart of a second embodiment of a method for selecting an authentication algorithm according to an embodiment of the present invention;
FIG. 6 is a schematic flowchart of a third embodiment of a method for selecting an authentication algorithm according to an embodiment of the present invention;
FIG. 7 is a fourth schematic interaction diagram of a method for selecting an authentication algorithm according to an embodiment of the present invention;
FIG. 8 is a fifth schematic interaction diagram of a method for selecting an authentication algorithm according to an embodiment of the present invention;
FIG. 9 is a sixth schematic interaction diagram of a method for selecting an authentication algorithm according to an embodiment of the present invention;
FIG. 10 is a schematic structural diagram of an embodiment of a serving device for selecting an authentication algorithm according to an embodiment of the present invention;
FIG. 11 is a schematic structural diagram of an embodiment of user equipment for selecting an authentication algorithm according to an embodiment of the present invention;
FIG. 12 is a schematic structural diagram of an embodiment of a control device for selecting an authentication algorithm according to an embodiment of the present invention; and
FIG. 13 is a schematic structural diagram of an embodiment of a system for selecting an authentication algorithm according to an embodiment of the present invention.

### DESCRIPTION OF EMBODIMENTS

The following clearly and completely describes the technical solutions in embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In specific implementation, a serving device described in the embodiments of the present invention may include a home location register (Home Location Register, HLR) in a 3G communications system, or a home subscriber server (Home Subscriber Server, HSS) in a 4G communications system, and the following uses the HSS as an example to describe in detail a method, apparatus, and system for selecting an authentication algorithm in the embodiments of the present invention. User equipment described in the embodiments of the present invention may include a mobile subscriber (Mobile Subscriber, MS) in the 3G communications system, or UE in the 4G communications system, and the following uses the UE as an example to describe in detail the method, apparatus, and system for selecting an authentication algorithm in the embodiments of the present invention. In addition, a control device described in the embodiments of the present invention may include a visitor location register (Visitor Location Register, VLR) and a serving GPRS support node (Serving GPRS Support Node, SGSN) in the 3G communications system, or a mobility management entity (Mobility Management Entity, MME) in the 4G communications system, and the following uses the MME as an example to describe in detail the method, apparatus, and system for selecting an authentication algorithm in the embodiments of the present invention.

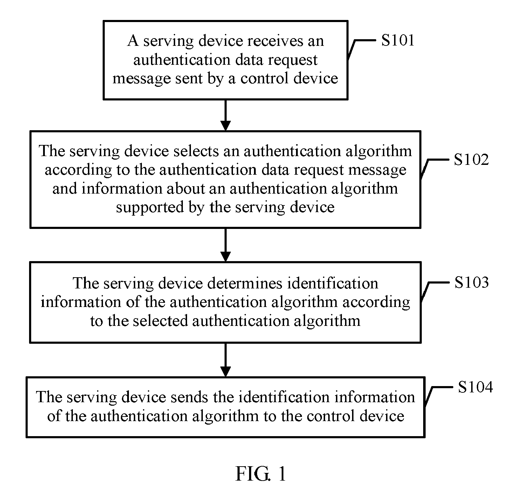

Referring to FIG. 1, FIG. 1 is a schematic flowchart of a first embodiment of a method for selecting an authentication algorithm according to an embodiment of the present invention. The method for selecting an authentication algorithm described in this embodiment includes the following steps:
S101. A serving device receives an authentication data request message sent by a control device.
S102. The serving device selects an authentication algorithm according to the authentication data request message and information about an authentication algorithm supported by the serving device.

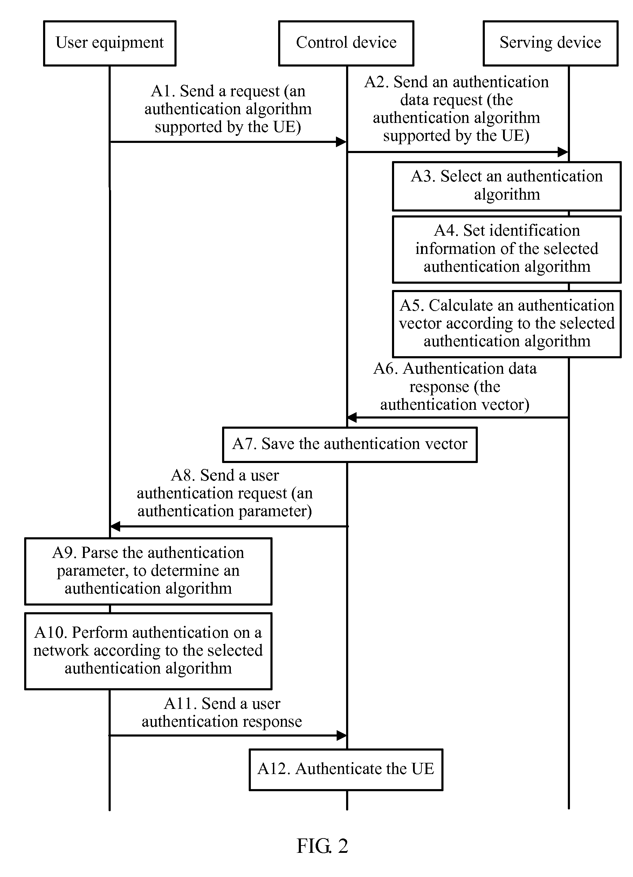

In some feasible implementation manners, an authentication data request message received by an HSS from an MME carries information about an authentication algorithm supported by a user equipment, where the foregoing information about the authentication algorithm supported by the user equipment may include: a Tuak algorithm supported by the UE, a Milenage algorithm supported by the UE, or the like. In specific implementation, when the authentication data request message received by the HSS from the MME includes the information about the authentication algorithm supported by the UE, and the HSS supports authentication algorithm selection (that is, the HSS can support the Tuak algorithm and the Milenage algorithm), according to the information that is about the authentication algorithm supported by the UE and is included in the foregoing authentication data request message, the HSS may select, from the authentication algorithm supported by the UE, an authentication algorithm that is also supported by the HSS (that is, an authentication algorithm supported by both the UE and the HSS), and set the foregoing selected authentication algorithm as an authentication algorithm used to authenticate the UE. For example, as shown in FIG. 2, when the authentication data request message received by the HSS from the MME includes the authentication algorithm supported by the UE (including the Tuak algorithm and the Milenage algorithm), and the HSS supports authentication algorithm selection, according to the authentication algorithm supported by the HSS, the HSS may select, from the authentication algorithm supported by the UE, the authentication algorithm that is also supported by the HSS as the authentication algorithm used to authenticate the UE. For example, when the HSS supports the Tuak algorithm, the HSS may select, from the authentication algorithm supported by the UE, the Tuak algorithm as the authentication algorithm used to authenticate the UE; when the HSS supports the Milenage algorithm, the HSS may select, from the authentication algorithm supported by the UE, the Milenage algorithm as the authentication algorithm used to authenticate the UE; when the HSS supports both the Tuak algorithm and the Milenage algorithm, the HSS may select, from the authentication algorithm supported by the UE, either authentication algorithm as the authentication algorithm used to authenticate the UE.

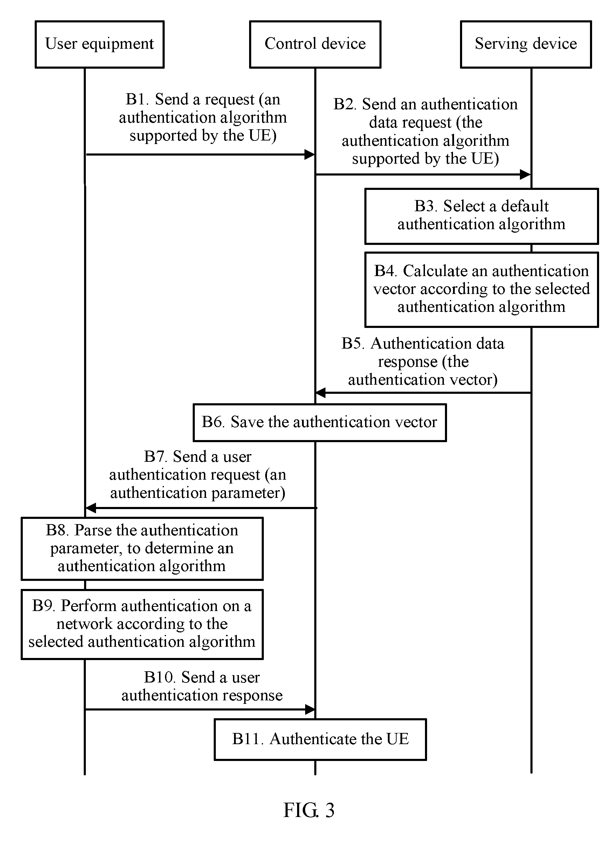

In some feasible implementation manners, if an HSS does not support authentication algorithm selection (that is, the HSS supports only the Milenage algorithm), when an authentication data request message received by the HSS from an MME includes information about an authentication algorithm supported by UE (including the Tuak algorithm and the Milenage algorithm), the HSS selects a default authentication algorithm as an authentication algorithm used to authenticate the UE, that is, the HSS selects the Milenage algorithm by default, and sets the foregoing Milenage algorithm as the authentication algorithm used to authenticate the UE, as shown in FIG. 3.

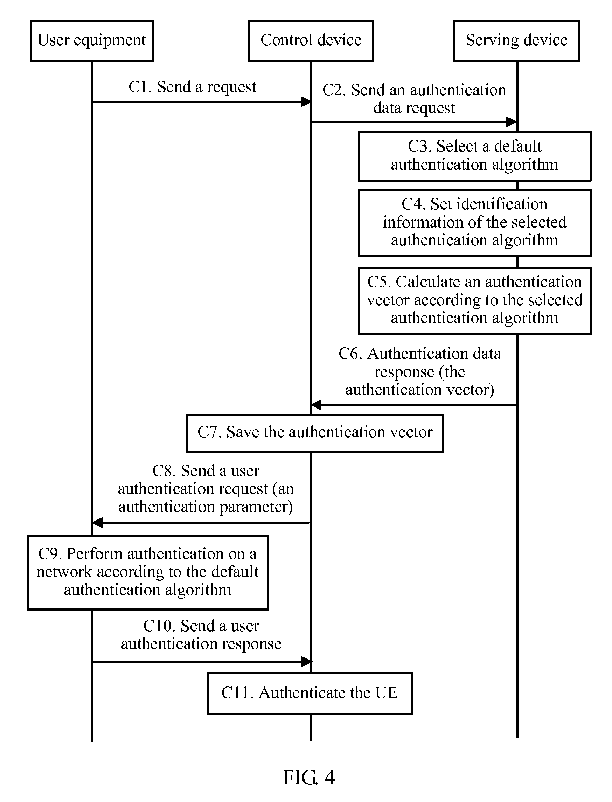

In some feasible implementation manners, when information, carried in an authentication data request message received by an HSS from an MME, about an authentication algorithm supported by UE is empty, that is, when the foregoing authentication data request message does not include the information about the authentication algorithm supported by the UE, the HSS selects a Milenage algorithm and sets the foregoing Milenage algorithm as an authentication algorithm used to authenticate the UE. That is, as shown in FIG. 4, if the HSS supports authentication algorithm selection (that is, the HSS may support both the Tuak algorithm and the Milenage algorithm), when the information, carried in the authentication data request message received by the HSS from the MME, about the authentication algorithm supported by the UE is empty, the HSS selects a default authentication algorithm. That is, the HSS selects the Milenage algorithm as the authentication algorithm used to authenticate the UE.

S103. The serving device determines identification information of the authentication algorithm according to the selected authentication algorithm.

In some feasible implementation manners, after selecting the authentication algorithm according to the authentication data request message sent by the MME, the HSS may set, in a preset authentication management field (Authentication Management Field, AMF) parameter, the identification information of the foregoing selected authentication algorithm, and specifically, may further determine, according to the foregoing AMF parameter and the foregoing selected authentication algorithm, an authentication vector used to authenticate the UE. In specific implementation, as shown in FIG. 2, if the HSS supports authentication algorithm selection, after selecting the authentication algorithm used to authenticate the UE, the HSS may set, in the preset AMF parameter, the identification information of the foregoing selected authentication algorithm, and may further obtain by calculation, according to the foregoing AMF parameter and the selected authentication algorithm, the authentication vector used to authenticate the UE, where the foregoing authentication vector obtained by the HSS by calculation according to the selected authentication algorithm includes an authentication parameter used to authenticate the UE, such as AUTN, MAC, and XRES, and a key, such as CK, IK, and AK. For example, when the HSS selects the Tuak algorithm as the authentication algorithm used to authenticate the UE, the HSS may select, from the preset AMF parameter, the X^{th} bit as a flag bit used to authenticate the UE, and may further set the X^{th} bit of the AMF parameter to 1 (that is, a first identifier), to serve as identification information of the Tuak algorithm used to authenticate the UE; when the HSS selects the Milenage algorithm as the authentication algorithm used to authenticate the UE, the HSS may select, from the preset AMF parameter, the X^{th} bit as a flag bit used to authenticate the UE, and may further set the X^{th} bit of the AMF parameter to 0 (that is, a second identifier), to serve as identification information of the authentication algorithm used to authenticate the UE. The X^{th} bit of the foregoing AMF parameter may be any one of 8 idle bits in the AMF parameter, that is, 1≤X≤7.

In some feasible implementation manners, as shown in FIG. 3, if the HSS does not support authentication algorithm selection, after the HSS selects the authentication algorithm used to authenticate the UE, the HSS does not set, in the preset AMF parameter, the identification information of the authentication algorithm used to authenticate the UE, and the HSS may calculate, according to the preset AMF parameter and the selected authentication algorithm, the authentication vector used to authenticate the UE. As shown in FIG. 3, because the HSS does not support authentication algorithm selection, the identification information of the authentication algorithm used to authenticate the UE cannot be set in the AMF parameter; therefore, after the HSS receives the authentication data request message sent by the MEE and selects the default algorithm (Milenage algorithm) as the authentication algorithm used to authenticate the UE, the HSS may calculate, according to the preset AMF parameter and the foregoing Milenage algorithm, the authentication vector used to authenticate the UE. In this case, in the foregoing authentication vector, a default value of the X^{th} bit of the AMF parameter is 0, and the default value of the X^{th} bit of the foregoing AMF parameter serves as identification information of the Milenage algorithm used to authenticate the UE.

S104. The serving device sends the identification information of the authentication algorithm to the control device.

In some feasible implementation manners, after determining, according to the authentication data request message sent by the MME, the authentication algorithm used to authenticate the UE, and determining the identification information of the foregoing authentication algorithm according to the selected authentication algorithm, the HSS may send, to the MME, the identification information (which may be specifically the authentication vector used to authenticate the UE) of the foregoing authentication algorithm. In specific implementation, the HSS may send the foregoing authentication vector to the MME by using an authentication data response message, where the foregoing authentication vector message sent to the MME includes the identification information of the authentication algorithm used to authenticate the UE. As shown in FIG. 2 or FIG. 4, after selecting, according to the authentication data request message sent by the MEE, the Tuak algorithm or the Milenage algorithm as the authentication algorithm used to authenticate the UE, and setting, in the X^{th} bit of the preset AMF parameter, the identification information of the foregoing Tuak algorithm or the Milenage algorithm, that is, after setting the X^{th} bit of the AMF parameter in the foregoing authentication vector to 0 or 1, the HSS may determine, according to the foregoing AMF parameter and the foregoing selected authentication algorithm, the authentication vector used to authenticate the UE, and further send, to the MEE, the authentication vector message that includes information about the X^{th} bit of the foregoing AMF parameter. After receiving the foregoing authentication vector message, the MME may save the foregoing authentication vector message and send, to the UE, authentication parameter information that is in the foregoing authentication vector message and is used to authenticate the UE. As shown in FIG. 3, when the HSS does not support authentication algorithm selection, after selecting by default the Milenage algorithm as the authentication algorithm used to authenticate the UE, and determining, according to the foregoing Milenage algorithm, the authentication vector used to authenticate the UE, the HSS may send the foregoing authentication vector to the MME, where the identification information that is of the authentication algorithm used to authenticate the UE and is included in the foregoing authentication vector message is identification information set by default in the preset AMF parameter, that is, the X^{th} bit of the AMF parameter in the foregoing authentication vector is set to 0 by default, and the HSS may send, to the MME, the authentication vector that includes information about the X^{th} bit of the foregoing AMF parameter. After receiving the foregoing authentication vector message, the MME may save the foregoing authentication vector message and send, to the UE, authentication parameter information that is in the foregoing authentication vector message and is used to authenticate the UE.

In this embodiment of the present invention, when an HSS supports authentication algorithm selection, according to information that is about an authentication algorithm supported by UE and is carried in an authentication data request message sent by an MME, the HSS may select, with reference to information about an authentication algorithm supported by the HSS, an authentication algorithm supported by both the UE and the HSS as an authentication algorithm (including a Tuak algorithm or a Milenage algorithm) used to authenticate the UE, and set a value (including 0 and 1) of the X^{th} bit of an AMF parameter according to the foregoing selected authentication algorithm used to authenticate the UE, and further determine, according to the foregoing AMF parameter and the selected authentication algorithm, an authentication vector used to authenticate the UE, and send, to the MME, the foregoing authentication vector that includes identification information of the selected authentication algorithm used to authenticate the UE. When the HSS does not support authentication algorithm selection, after receiving an authentication data request message sent by the MME, the HSS selects by default the Milenage algorithm as the authentication algorithm used to authenticate UE, and determines, according to the preset AMF parameter and the foregoing Milenage algorithm, the authentication vector used to authenticate the UE, and further sends, to the MME, the foregoing authentication vector used to authenticate the UE. In this embodiment of the present invention, the HSS may select, according to the authentication algorithm supported by the UE and the authentication algorithm supported by the HSS, the authentication algorithm supported by both the UE and the HSS as the authentication algorithm used to authenticate the UE, and determine, according to the selected authentication algorithm, the identification information of the authentication algorithm and the authentication vector used to authenticate the UE; afterwards, the identification information of the authentication algorithm is used to notify the UE of the authentication algorithm used to authenticate the UE, which improves diversity of choices of authentication algorithms used to authenticate the UE, improves resource utilization of the UE and the HSS, and enhances user experience of UE authentication.

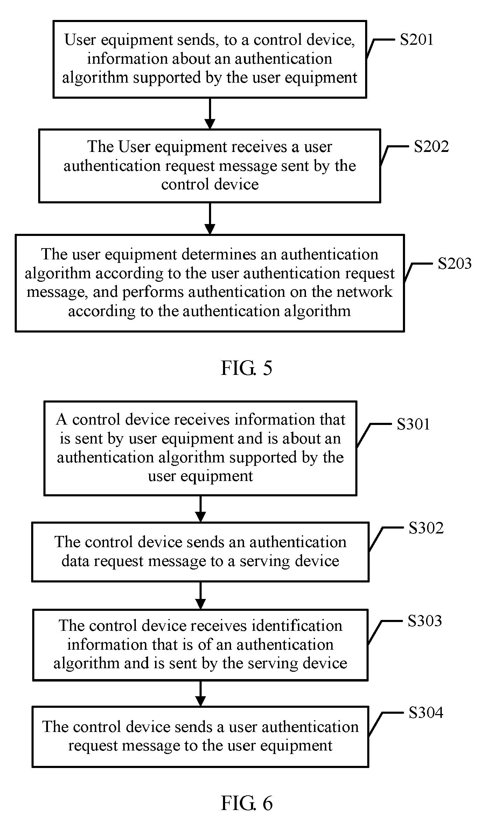

Referring to FIG. 5, FIG. 5 is a schematic flowchart of a second embodiment of a method for selecting an authentication algorithm according to an embodiment of the present invention. The method for selecting an authentication algorithm described in this embodiment includes the following steps:
S201. User equipment sends, to a control device, information about an authentication algorithm supported by the user equipment.
   In some feasible implementation manners, when the UE needs to send, to an MME, the information about the authentication algorithm supported by the UE, the UE may send a request message to the MME, and send, to the MME by using the foregoing request message, the foregoing information about the authentication algorithm supported by the UE; or when the MME needs to learn the information about the authentication algorithm supported by the UE, the MME may send a request message to the UE, to request the UE to send, to the MME, the information about the authentication algorithm supported by the UE, and after receiving the request sent by the MME, the UE may send a response message to the MME, and send, to the MME by using the foregoing response message, the information about the authentication algorithm supported by the UE. This embodiment of the present invention sets no limitation on a sending manner in which the UE sends, to the MME, the information about the authentication algorithm supported by the UE, and the foregoing sending manner in which the information about the authentication algorithm supported by the UE is sent to the MME by using the request message or the response message is merely exemplary rather than exhaustive. In this embodiment of the present invention, the sending manner in which the information about the authentication algorithm supported by the UE is sent to the MME by using the request message is used as an example for detailed description. In specific implementation, the request message sent to the MME by the UE may be an attach (Attach) request, or a tracking area update (Tracking Area Update, TAU) request, or a registration (Registration) request, or the like, and this embodiment of the present invention sets no limitation on a message type of the foregoing request message. In the request message sent to the MME by the UE, the information about the authentication algorithm supported by the UE may be added to the foregoing request message and sent to the MME. In specific implementation, when the UE supports authentication algorithm selection (that is, the UE can support a Tuak algorithm and a Milenage algorithm), when sending the request message to the MME, the UE may add the information about the authentication algorithm (including the Tuak algorithm or the Milenage algorithm) supported by the UE to the foregoing request message to send to the MME, as shown in FIG. 2 or FIG. 3, that is, in this case, the request message sent to the MME by the UE carries information about the Tuak algorithm or the Milenage algorithm supported by the UE; when the UE does not support authentication algorithm selection (that is, the UE supports only the Milenage algorithm), when sending the request message to the MME, the UE does not send, to the MME, the information about the authentication algorithm supported by the UE, that is, in this case, the information, carried in the request message sent to the MME by the UE, about the authentication algorithm supported by the UE is empty.
S202. The user equipment receives a user authentication request message sent by the control device.
S203. The user equipment determines an authentication algorithm according to the user authentication request message, and performs authentication on the network according to the authentication algorithm.

In some feasible implementation manners, after the UE sends the request message to the MME, the MME may send, according to the request message sent by the UE, an authentication data request message to an HSS. After receiving the authentication data request message sent by the MME, the HSS may select, according to the foregoing authentication data request message, an authentication algorithm used to authenticate the UE, and set identification information of the foregoing authentication algorithm according to the selected authentication algorithm, and determine an authentication vector used to authenticate the UE, and further send, to the UE by using the MME, the authentication vector that includes the identification information of the foregoing authentication algorithm. After receiving the identification information that is of the authentication algorithm used to authenticate the UE and is sent by the HSS, the MME may save the foregoing identification information (which may be specifically the authentication vector used to authenticate the UE) of the authentication algorithm used to authenticate the UE, and send, to the UE by sending the user authentication request to the UE, the foregoing identification information of the authentication algorithm used to authenticate the UE. After receiving the user authentication request message sent by the MME, the UE may determine, according to the foregoing user authentication request message, the authentication algorithm used to authenticate the UE by the network, and further determine the authentication algorithm (that is the authentication algorithm used to authenticate the network by the UE) according to the authentication algorithm used to authenticate the UE by the network, and perform authentication on the network according to the foregoing determined authentication algorithm used to authenticate the network. The foregoing user authentication request message that is received by the UE and is sent by the MME includes an authentication parameter used to authenticate the UE, that is, including a parameter in the authentication vector that is used to authenticate the UE and is set by the HSS according to the request message sent by the UE, including an AUTN parameter, a RAND parameter, and the like.

In some feasible implementation manners, when the UE supports authentication algorithm selection, after the UE adds the information about the authentication algorithm supported by the UE to the request message to send to the MME, when the UE receives the user authentication request message from the MME, the UE may parse the foregoing user authentication request message, to acquire, from the authentication parameter included in the foregoing user authentication request message, the identification information of the authentication algorithm used to authenticate the UE by the network. In specific implementation, when the HSS supports authentication algorithm selection, and when the authentication data request message received from the MME by the HSS carries the information about the authentication algorithm supported by the UE, the HSS may determine, according to the authentication algorithm supported by the UE and an authentication algorithm supported by the HSS, the authentication algorithm used to authenticate the UE, set, in a preset AMF parameter, the identification information of the selected authentication algorithm, and obtain, by calculation according to the foregoing AMF parameter that includes the identification information of the authentication algorithm, the authentication vector used to authenticate the UE. After the HSS determines the foregoing authentication vector, the authentication parameter that is in the foregoing authentication vector and is used to authenticate the UE may be sent to the UE by using the MME. After receiving the user authentication request sent by the MME, the UE may parse the authentication parameter included in the foregoing user authentication request message, to acquire, from the foregoing authentication parameter, the identification information of the authentication algorithm used to authenticate the UE by the network, where the foregoing identification information of the authentication algorithm used to authenticate the UE by the network includes: a first identifier (for example, 1) or a second identifier (for example, 0) of a flag bit (that is, the X^{th} bit of the foregoing AMF parameter) that is in the foregoing AMF parameter and is of the authentication algorithm used to authenticate the UE. As shown in FIG. 2, after receiving the user authentication request message sent by the MME, the UE may analyze the X^{th} bit of the AMF parameter in the foregoing user authentication request message, acquire the identification information (including 0 or 1) of the authentication algorithm from the X^{th} bit of the foregoing AMF parameter, and determine, according to the acquired identification information, the authentication algorithm used to authenticate the UE by the network, and further determine the authentication algorithm (which is kept consistent with the authentication algorithm used to authenticate the UE by the network) used to authenticate the network by the UE. For example, when learning from the foregoing AMF parameter that a value of the X^{th} bit of the AMF parameter is 1 (that is, the first identifier), the UE may determine that the authentication algorithm used to authenticate the UE by the network is the Tuak algorithm, and after determining the authentication algorithm used to authenticate the UE by the network, the UE may determine that the authentication algorithm used to authenticate the network by the UE is the Tuak algorithm, and further perform authentication on the network according to the foregoing Tuak algorithm; or when learning from the foregoing AMF parameter that a value of the X^{th} bit of the AMF parameter is 0 (that is, the second identifier), the UE may determine that the authentication algorithm used to authenticate the UE by the network is the Milenage algorithm, and after determining the authentication algorithm used to authenticate the UE by the network, the UE may determine that the authentication algorithm used to authenticate the network by the UE is the Milenage algorithm, and further perform authentication on the network according to the foregoing Milenage algorithm.

In some feasible implementation manners, when the UE does not support authentication algorithm selection, the information, carried in the request message sent to the MME by the UE, about the authentication algorithm supported by the UE is empty, and the information, carried in the authentication data request message received by the HSS from the MME, about the authentication algorithm supported by the UE is also empty. In this case, the HSS selects a default authentication algorithm (the Milenage algorithm), and the identification information that is of the authentication algorithm used to authenticate the UE and is included in the authentication vector determined by the HSS according to the selected authentication algorithm is the second identifier (0) of the X^{th} bit of the AMF parameter, as shown in FIG. 4. After receiving the user authentication request sent by the MME, the UE performs authentication on the network according to the default authentication algorithm (that is, the Milenage algorithm), that is, in this case, the authentication algorithm used to authenticate the UE by the network and the authentication algorithm used to authenticate the network by the UE are both the Milenage algorithm. In specific implementation, after determining the authentication algorithm used to authenticate the network, the UE may send, to the MME by using a user authentication response, information about the foregoing authentication algorithm used to authenticate the network, so that the authentication on the UE by the network is completed by using the MME, allowing the UE to access the network. In specific implementation, for the foregoing specific implementation process in which after receiving, from the MME, information included in the request message sent by the UE, the HSS determines, according to the foregoing information, the authentication algorithm used to authenticate the UE and the identification information of the authentication algorithm, and sends information such as the identification information of the foregoing authentication algorithm to the UE by using the MME, refer to the first embodiment for selecting an authentication algorithm provided in the embodiments of the present invention, and details are not described herein again.

In this embodiment of the present invention, when UE supports authentication algorithm selection, the UE may send, to an MME by using a request message, information about an authentication algorithm supported by the UE, and may further acquire, according to a user authentication request sent by the MME, information about an authentication algorithm used to authenticate the UE by a network, and further set the authentication algorithm used to authenticate the UE by the network as an authentication algorithm used to authenticate the network by the UE, and perform authentication on the network according to the foregoing authentication algorithm; when the UE does not support authentication algorithm selection, the UE sends a request message to the MME, and after receiving the request message sent by the UE, the network selects a default Milenage algorithm as the authentication algorithm used to authenticate the UE, and after receiving an user authentication request sent by the MME, the UE may set the default Milenage algorithm as the authentication algorithm used to authenticate the network, so as to implement uniformity of the authentication algorithms, so that the authentication on the UE is completed by using the MME, allowing the UE to access the network. In this embodiment of the present invention, diversity of choices of authentication algorithms used to authenticate the UE is improved, resource utilization of a terminal is improved, and user experience of UE authentication is enhanced.

Referring to FIG. 6, FIG. 6 is a schematic flowchart of a third embodiment of a method for selecting an authentication algorithm according to an embodiment of the present invention. The method for selecting an authentication algorithm described in this embodiment includes the following steps:
S301. A control device receives information that is sent by a user equipment and is about an authentication algorithm supported by the user equipment.
S302. The control device sends an authentication data request message to a serving device.
S303. The control device receives identification information that is of an authentication algorithm and is sent by the serving device.
S304. The control device sends a user authentication request message to the user equipment.

In some feasible implementation manners, when the UE needs to send, to an MME, the information about the authentication algorithm supported by the UE, the UE may send a request message to the MME, and send, to the MME by using the foregoing request message, the foregoing information about the authentication algorithm supported by the UE; or when the MME needs to learn the information about the authentication algorithm supported by the UE, the MME may send a request message to the UE, to request the UE to send, to the MME, the information about the authentication algorithm supported by the UE, and after receiving the request sent by the MME, the UE may send a response message to the MME, and send, to the MME by using the foregoing response message, the information about the authentication algorithm supported by the UE. This embodiment of the present invention sets no limitation on a sending manner in which the UE sends, to the MME, the information about the authentication algorithm supported by the UE, and the foregoing sending manner in which the information about the authentication algorithm supported by the UE is sent to the MME by using the request message or the response message is merely exemplary rather than exhaustive. In this embodiment of the present invention, the sending manner in which the information about the authentication algorithm supported by the UE is sent to the MME by using the request message is used as an example for detailed description. In specific implementation, the foregoing information about the authentication algorithm supported by the UE includes: a Tuak algorithm supported by the UE, or a Milenage algorithm supported by the UE, or the information about the authentication algorithm supported by the UE is empty. That is, when the UE supports authentication algorithm selection (that is, the UE supports the Tuak algorithm and the Milenage algorithm), when sending the request message to the MME, the UE may send, to the MME by using the foregoing request message, the information about the authentication algorithm supported by the UE; when the UE does not support authentication algorithm selection (that is, the UE supports only the Milenage algorithm), the information, carried in the request message sent to the MME by the UE, about the authentication algorithm supported by the UE is empty. After receiving the request message sent by the UE, the MME may send an authentication data request message to an HSS according to the foregoing request message. When the request message sent by the UE carries the information about the authentication algorithm supported by the UE, when sending the authentication data request message to the HSS, the MME may send, to the HSS by using the foregoing authentication data request message, the foregoing information about the authentication algorithm supported by the UE; when the information, carried in the request message sent by the UE, about the authentication algorithm supported by the UE is empty, when the MME sends the authentication data request message to the HSS, the information, carried in the foregoing authentication data request message, about the authentication algorithm supported by the UE is empty.

In some feasible implementation manners, after the MME sends the authentication data request message to the HSS, the HSS may determine, according to the foregoing authentication data request message, the authentication algorithm used to authenticate the UE, and obtain, by calculation according to the determined authentication algorithm, identification information (which may be specifically an authentication vector used to authenticate the UE) of the authentication algorithm used to authenticate the UE. After determining, according to the authentication data request message sent by the MME, the authentication algorithm used to authenticate the UE, and determining, according to the foregoing authentication algorithm, the authentication vector used to authenticate the UE, the HSS may send the foregoing authentication vector to the MME by using an authentication data response message. After receiving the authentication data response message sent by the HSS, the MME may save the authentication vector included in the foregoing authentication data response message, and further send the user authentication request message to the UE, so as to send, to the UE, an authentication parameter that is used to authenticate the UE and is included in the foregoing authentication vector used to authenticate the UE, as shown in FIG. 2, FIG. 3 or FIG. 4. After receiving the user authentication request message sent by the MME, the UE may acquire, from the user authentication request message, information such as the authentication parameter used to authenticate the UE by a network, and further determine, according to the foregoing authentication parameter, an authentication algorithm used to authenticate the network. In specific implementation, for the foregoing specific implementation process in which the HSS determines, according to the authentication data request message sent by the MME, the authentication algorithm used to authenticate the UE and the authentication vector, and sends information such as the foregoing authentication vector to the MME by using the authentication data response message, refer to the first embodiment of the method for selecting an authentication algorithm provided in the embodiments of the present invention, and details are not described herein again. For the foregoing specific implementation process in which the UE sends the request message to the MME, and determines, according to the user authentication request sent by the MME, the authentication algorithm used to authenticate the network, refer to the second embodiment of the method for selecting an authentication algorithm provided in the embodiments of the present invention, and details are not described herein again.

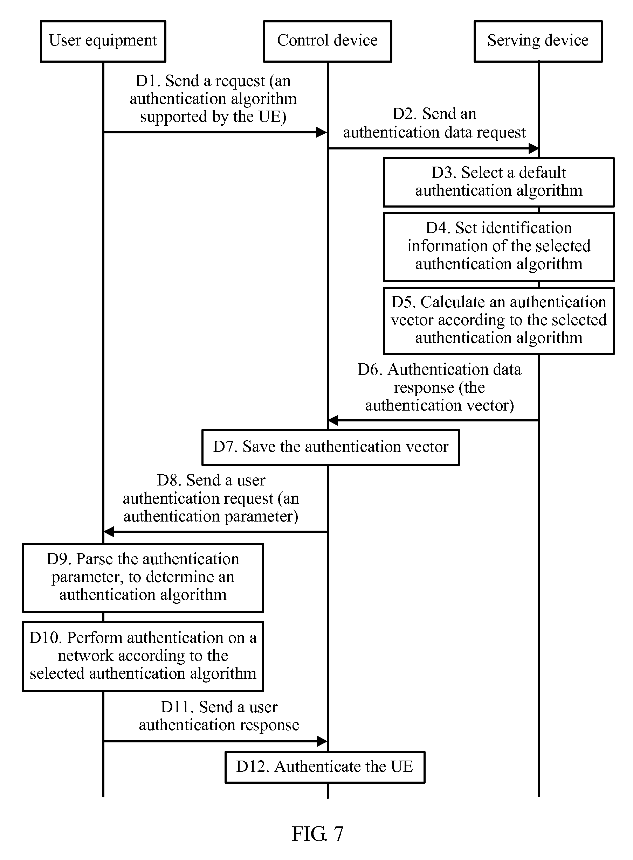

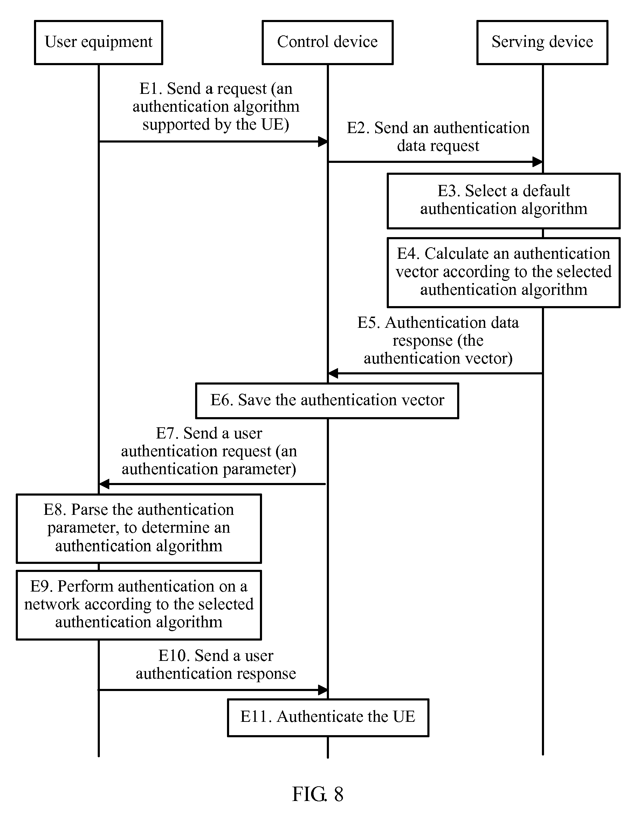

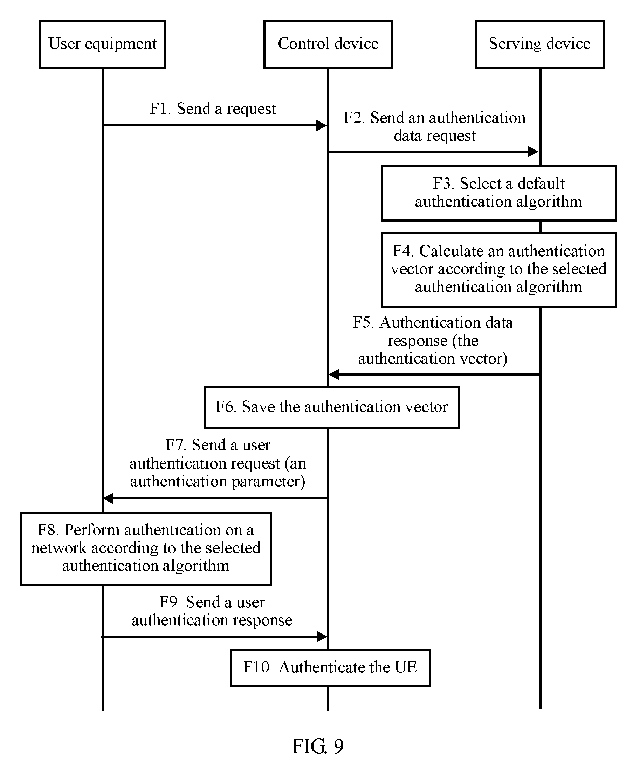

In some feasible implementation manners, when the MME supports saving and forwarding of the information about the authentication algorithm supported by the UE, if the request message sent to the MME by the UE carries the information about the authentication algorithm supported by the UE (that is, the UE supports the Tuak algorithm and the Milenage algorithm), after receiving the request message sent by the UE, the MME may save the information about the authentication algorithm supported by the UE, and send, to the HSS by using the authentication data request message, the foregoing information about the authentication algorithm supported by the UE, as shown in FIG. 2 or FIG. 3; if the information, carried in the request message sent to the MME by the UE, about the authentication algorithm supported by the UE is empty, after receiving the foregoing request message, the MME may send the authentication data request message to the HSS, where the information, carried in the foregoing authentication data request message, about the authentication algorithm supported by the UE is empty, as shown in FIG. 4. When the MME does not support storing and forwarding of the information about the authentication algorithm supported by the UE, if the request message sent to the MME by the UE carries the information about the authentication algorithm supported by the UE (that is, the UE supports the Tuak algorithm and the Milenage algorithm), after receiving the request message sent by the UE, the MME cannot save the information about the authentication algorithm supported by the UE, and in this case, when the MME sends the authentication data request message to the HSS, the information, carried in the foregoing authentication data request message, about the authentication algorithm supported by the UE is empty, as shown in FIG. 7 or FIG. 8; if the information, carried in the request message sent to the MME by the UE, about the authentication algorithm supported by the UE is empty, after receiving the request message sent by the UE, the MME may send the authentication data request message to the HSS, where the information, carried in the foregoing authentication data request message, about the authentication algorithm supported by the UE is empty, as shown in FIG. 9.

In some feasible implementation manners, after sending the user authentication request message to the UE, the MME may further acquire a user authentication response message from the UE, and complete the authentication on the UE according to the authentication vector that is used to authenticate the UE and is sent by the HSS and saved by the MME, allowing the UE to access the network.

In this embodiment of the present invention, an MME may receive information that is about an authentication algorithm supported by UE and is sent by the UE, send an authentication data request message to an HSS according to the information about the authentication algorithm supported by the UE, and acquire, from the HSS, information such as identification information (which may be specifically an authentication vector used to authenticate the UE) of an authentication algorithm that is used to authenticate the UE and is determined by the HSS according to the foregoing authentication data request message, so as to send a user authentication request to the UE, and send, to the UE, the foregoing information such as the identification information of the authentication algorithm that is used to authenticate the UE and is determined by the HSS, so that the UE determines an authentication algorithm used to authenticate a network by the UE. The MME may further acquire a user authentication response message from the UE, and complete, with reference to information such as the authentication vector that is used to authenticate the UE and is sent by the HSS, authentication on the UE for accessing the network, thereby allowing the UE to access the network. The MME may further send the authentication data request message to the HSS according to its own configurations (that is, whether saving and forwarding of the information about the authentication algorithm supported by the UE are supported), which enriches diversity of authentication algorithms used to authenticate the UE, improves terminal utilization of UE authentication, and enhances user experience of the UE authentication.

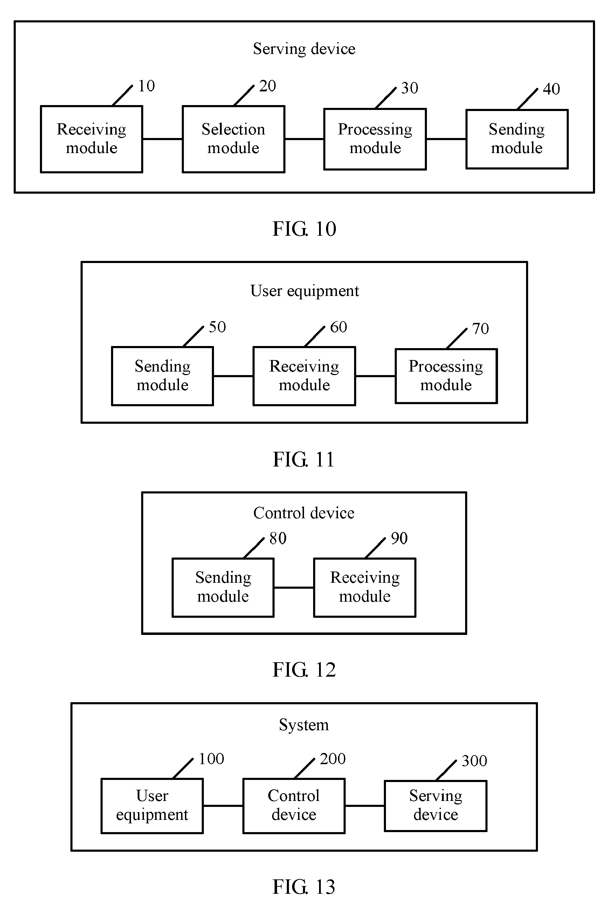

Referring to FIG. 10, FIG. 10 is a schematic structural diagram of an embodiment of a serving device for selecting an authentication algorithm according to an embodiment of the present invention. The serving device described in this embodiment includes:
a receiving module 10, configured to receive an authentication data request message sent by a control device, where the authentication data request message carries information about an authentication algorithm supported by a user equipment;
a selection module 20, configured to select an authentication algorithm according to the authentication data request message received by the receiving module and information about an authentication algorithm supported by the serving device;
a processing module 30, configured to determine identification information of the authentication algorithm according to the authentication algorithm selected by the selection module; and
a sending module 40, configured to send the identification information of the authentication algorithm to the control device, so that the control device sends the identification information of the authentication algorithm to the user equipment.

In some feasible implementation manners, the identification information that is of the authentication algorithm and is carried in the authentication data request message received by the foregoing receiving module 10 includes: a Tuak algorithm supported by the user equipment, and/or a Milenage algorithm supported by the user equipment.

The selection module 20 is specifically configured to:
select, from the authentication algorithm supported by the user equipment and the authentication algorithm supported by the serving device, an authentication algorithm supported by both the user equipment and the serving device, and set the authentication algorithm as the selected authentication algorithm; where
the authentication algorithm supported by the serving device includes: the Tuak algorithm, and/or the Milenage algorithm.

In some feasible implementation manners, the information, carried in the authentication data request message received by the foregoing receiving module 10, about the authentication algorithm supported by the user equipment is empty;
the information about the authentication algorithm supported by the serving device includes: the Tuak algorithm supported by the serving device, and/or the Milenage algorithm supported by the serving device; and
the selection module 20 is specifically configured to:
select, by the serving device, the Milenage algorithm from the authentication algorithm supported by the serving device, and set the Milenage algorithm as the selected authentication algorithm.

In some feasible implementation manners, the authentication data request message received by the receiving module 10 of an HSS from an MME carries the information about the authentication algorithm supported by the user equipment, where the foregoing information about the authentication algorithm supported by the user equipment may include: the Tuak algorithm supported by the UE, or the Milenage algorithm supported by the UE, or the like. In specific implementation, when the authentication data request message received by the receiving module 10 from the MME includes the information about the authentication algorithm supported by the UE, and the HSS supports authentication algorithm selection (that is, the HSS can support the Tuak algorithm and the Milenage algorithm), according to the information that is about the authentication algorithm supported by the UE and is included in the foregoing authentication data request message, the selection module 20 may select, from the authentication algorithm supported by the UE, an authentication algorithm that is also supported by the HSS (that is, an authentication algorithm supported by both the UE and the HSS), and set the foregoing selected authentication algorithm as the authentication algorithm used to authenticate the UE. For example, as shown in FIG. 2, when the authentication data request message received by the receiving module 10 from the MME includes the authentication algorithm supported by the UE (including the Tuak algorithm and the Milenage algorithm), and when the HSS supports authentication algorithm selection, according to the authentication algorithm supported by the HSS, the selection module 20 may select, from the authentication algorithm supported by the UE, the authentication algorithm that is also supported by the HSS as the authentication algorithm used to authenticate the UE. For example, when the HSS supports the Tuak algorithm, the selection module 20 may select, from the authentication algorithm supported by the UE, the Tuak algorithm as the authentication algorithm used to authenticate the UE; when the HSS supports the Milenage algorithm, the selection module 20 may select, from the authentication algorithm supported by the UE, the Milenage algorithm as the authentication algorithm used to authenticate the UE; when the HSS supports both the Tuak algorithm and the Milenage algorithm, the selection module 20 may select, from the authentication algorithm supported by the UE, either authentication algorithm as the authentication algorithm used to authenticate the UE.

In some feasible implementation manners, if an HSS does not support authentication algorithm selection (that is, the HSS supports only the Milenage algorithm), when the authentication data request message received by the receiving module 10 from an MME includes the information about the authentication algorithm supported by the UE (including the Tuak algorithm and the Milenage algorithm that are supported by the UE), the selection module 20 selects a default authentication algorithm as the authentication algorithm used to authenticate the UE, that is, the selection module 20 selects the Milenage algorithm by default, and set the foregoing Milenage algorithm as the authentication algorithm used to authenticate the UE, as shown in FIG. 3.

In some feasible implementation manners, when the information, carried in the authentication data request message received by the receiving module 10 from an MME, about the authentication algorithm supported by the UE is empty, that is, when the foregoing authentication data request message does not include the information about the authentication algorithm supported by the UE, the selection module 20 selects the Milenage algorithm and sets the foregoing Milenage algorithm as the authentication algorithm used to authenticate the UE. That is, as shown in FIG. 4, if an HSS supports authentication algorithm selection (that is, the HSS can support the Tuak algorithm and the Milenage algorithm), when the information, carried in the authentication data request message received by the receiving module 10 from the MME, about the authentication algorithm supported by the UE is empty, the selection module 20 selects a default authentication algorithm, that is, the selection module 20 selects the Milenage algorithm as the authentication algorithm used to authenticate the UE. In specific implementation, for the foregoing specific implementation process in which the receiving module and the selection module of the HSS select, according to the received authentication data request message sent by the MME, the authentication algorithm used to authenticate the UE, refer to steps S101 and S102 in the first embodiment for selecting an authentication algorithm provided in the embodiments of the present invention, and details are not described herein again.

In some feasible implementation manners, the identification information that is of the authentication algorithm and is determined by the foregoing processing module 30 is specifically an authentication vector used to authenticate the user equipment.

When the foregoing selection module 20 sets the Tuak algorithm as the selected authentication algorithm, the processing module 30 is specifically configured to:
select, from a preset AMF parameter, a flag bit of an authentication algorithm used to authenticate the user equipment, and set the flag bit to a first identifier, where the first identifier is used as identification information of the Tuak algorithm; and
generate, according to the AMF parameter and the Tuak algorithm, the authentication vector used to authenticate the user equipment.

In some feasible implementation manners, the identification information that is of the authentication algorithm and is determined by the foregoing processing module 30 is specifically an authentication vector used to authenticate the user equipment; and
when the foregoing selection module 20 sets the Milenage algorithm as the selected authentication algorithm, the processing module 30 is specifically configured to:
select, from a preset AMF parameter, a flag bit of an authentication algorithm used to authenticate the user equipment, and set the flag bit to a second identifier, where the second identifier is used as identification information of the Milenage algorithm; and
generate, according to the AMF parameter and the Milenage algorithm, the authentication vector used to authenticate the user equipment.

In some feasible implementation manners, after the selection module 20 of the HSS selects, according to the authentication data request message sent by the MME, the authentication algorithm used to authenticate the UE, the processing module 30 may set, in the preset AMF parameter, the identification information of the foregoing selected authentication algorithm, and further determine, according to the foregoing AMF parameter and the foregoing selected authentication algorithm, the authentication vector used to authenticate the UE. In specific implementation, as shown in FIG. 2, if the HSS supports authentication algorithm selection, after the selection module 20 selects the authentication algorithm used to authenticate the UE, the processing module 30 may set, in the preset AMF parameter, the identification information of the foregoing selected authentication algorithm, and obtain, by calculation according to the foregoing AMF parameter and the selected authentication algorithm, the authentication vector used to authenticate the UE, where the authentication vector obtained by the foregoing processing module 30 by calculation according to the authentication algorithm selected by the selection module 20 includes an authentication parameter used to authenticate the UE, such as AUTN, MAC, and XRES, and a key, such as CK, IK, and AK. For example, when the selection module 20 of the HSS selects the Tuak algorithm as the authentication algorithm used to authenticate the UE, the processing module 30 of the HSS may select, from the preset AMF parameter, the X^{th} bit as a flag bit used to authenticate the UE, and further set the X^{th} bit of the AMF parameter to 1 (that is, the first identifier), to serve as the identification information of the Tuak algorithm used to authenticate the UE; when the selection module 20 of the HSS selects the Milenage algorithm as the authentication algorithm used to authenticate the UE, the processing module 30 of the HSS may select, from the preset AMF parameter, the X^{th} bit as a flag bit used to authenticate the UE, and further set the X^{th} bit of the AMF parameter to 0 (that is, the second identifier), to serve as the identification information of the Milenage algorithm. The X^{th} bit of the foregoing AMF parameter may be any one of 8 idle bits in the AMF parameter, that is, 1≤X≤7.

In some feasible implementation manners, as shown in FIG. 3, if the HSS does not support authentication algorithm selection, after the selection module 30 of the HSS selects the authentication algorithm used to authenticate the UE, the processing module 30 of the HSS does not set, in the foregoing preset AMF parameter, the identification information of the authentication algorithm used to authenticate the UE, and the processing module 30 of the HSS may calculate, according to the preset AMF parameter and the selected authentication algorithm, the authentication vector used to authenticate the UE. As shown in FIG. 3, because the HSS does not support authentication algorithm selection, the processing module 30 cannot set, in the AMF parameter, the identification information of the authentication algorithm used to authenticate the UE; therefore, after the receiving module 10 of the HSS receives the authentication data request message sent by the MEE and the selection module 20 selects the default algorithm (the Milenage algorithm) as the authentication algorithm used to authenticate the UE, the processing module 30 of the HSS may obtain, by calculation according to the preset AMF parameter and the foregoing Milenage algorithm, the authentication vector used to authenticate the UE. In this case, the X^{th} bit of the AMF parameter in the foregoing authentication vector is set to a default value 0, and the default value of the X^{th} bit of the foregoing AMF parameter is used as the identification information of the Milenage algorithm used to authenticate the UE.

In some feasible implementation manners, after the processing module 30 of the HSS determines, according to the authentication data request message that is sent by the MME and is received by the receiving module 10, the authentication algorithm used to authenticate the UE, and determines, according to the selected authentication algorithm, the identification information (which may be specifically the authentication vector) of the authentication algorithm used to authenticate the UE, the sending module 40 may send, to the MME, the authentication vector determined by the foregoing processing module 30. In specific implementation, the HSS may send the foregoing authentication vector to the MME by using an authentication data response message sent to the MME by the sending module 40, where the foregoing authentication vector message sent to the MME by the sending module 40 includes the identification information of the authentication algorithm used to authenticate the UE. As shown in FIG. 2 or FIG. 4, after the selection module 20 of the HSS selects, according to the authentication data request message that is sent by the MEE and is received by the receiving module 10, the Tuak algorithm or the Milenage algorithm as the authentication algorithm used to authenticate the UE, and the processing module 30 sets, in the X^{th} bit of the preset AMF parameter, the identification information of the foregoing Tuak algorithm or the Milenage algorithm, that is, after the X^{th} bit of the AMF parameter in the foregoing authentication vector is set to 0 or 1, the processing module 30 may determine, according to the foregoing AMF parameter and the foregoing selected authentication algorithm, the authentication vector used to authenticate the UE, so that the sending module 40 sends, to the MEE, the authentication vector message that includes information about the X^{th} bit of the foregoing AMF parameter. After receiving the foregoing authentication vector message, the MME may save the foregoing authentication vector message and send, to the UE, authentication parameter information that is in the foregoing authentication vector message and is used to authenticate the UE. As shown in FIG. 3, when the HSS does not support authentication algorithm selection, after the selection module 20 of the HSS selects by default the Milenage algorithm as the authentication algorithm used to authenticate the UE, and the processing module 30 determines, according to the Milenage algorithm selected by the foregoing selection module 20, the authentication vector used to authenticate the UE, the sending module 40 may send the foregoing authentication vector to the MME, where the identification information that is of the authentication algorithm used to authenticate the UE and is included in the foregoing authentication vector message is identification information set by default in the preset AMF parameter, that is, the X^{th} bit of the AMF parameter in the foregoing authentication vector is set to 0 by default, and the sending module 40 of the HSS may send, to the MME, the authentication vector that includes the information about the X^{th} bit of the foregoing AMF parameter. After receiving the foregoing authentication vector message, the MME may save the foregoing authentication vector message and send, to the UE, authentication parameter information that is in the foregoing authentication vector message and is used to authenticate the UE. In specific implementation, for the specific implementation process in which the processing module and the sending module of the HSS determine, according to the authentication algorithm selected by the selection module, the authentication vector used to authenticate the UE and send the foregoing authentication vector to the MME, refer to steps S103 and S104 in the first embodiment of the method for selecting an authentication algorithm provided in the embodiments of the present invention, and details are not described herein again.

If an HSS described in this embodiment of the present invention supports authentication algorithm selection, according to information that is about an authentication algorithm supported by UE and is carried in an authentication data request message sent by an MME, the HSS may select, with reference to information about an authentication algorithm supported by the HSS, an authentication algorithm used to authenticate the UE (including a Tuak algorithm or a Milenage algorithm), and set a value (including 0 and 1) of the X^{th} bit of an AMF parameter according to the foregoing selected authentication algorithm used to authenticate the UE, and further determine, according to the foregoing AMF parameter and the selected authentication algorithm, an authentication vector used to authenticate the UE, and send, to the MME, the foregoing authentication vector that includes identification information of the selected authentication algorithm used to authenticate the UE. If the HSS does not support authentication algorithm selection, after receiving an authentication data request message sent by the MME, the HSS selects by default the Milenage algorithm as the authentication algorithm used to authenticate the UE, and determines, according to the preset AMF parameter and the foregoing Milenage algorithm, the authentication vector used to authenticate the UE, and further send, to the MME, the foregoing authentication vector used to authenticate the UE. The HSS described in this embodiment of the present invention may select, according to the authentication algorithm supported by the UE and the authentication algorithm supported by the HSS, the authentication algorithm used to authenticate the UE, determine, according to selected authentication algorithm, the authentication vector used to authenticate the UE, and add, to the foregoing authentication vector, the identification information of the authentication algorithm used to authenticate the UE, so as to notify the UE of the authentication algorithm used to authenticate the UE, which improves diversity of choices of authentication algorithms used to authenticate the UE, improves resource utilization of the UE and the HSS, and enhances user experience of UE authentication.

Referring to FIG. 11, FIG. 11 is a schematic structural diagram of an embodiment of user equipment for selecting an authentication algorithm according to an embodiment of the present invention. The user equipment described in this embodiment includes:
a sending module 50, configured to send, to a control device, information about an authentication algorithm supported by the user equipment;
a receiving module 60, configured to receive a user authentication request message sent by the control device; and
a processing module 70, configured to: determine an authentication algorithm according to the user authentication request message, and perform authentication on the network according to the authentication algorithm.

In some feasible implementation manners, when the UE needs to send, to an MME, the information about the authentication algorithm supported by the UE, the UE may send a request message to the MME, and send, to the MME by using the foregoing request message, the foregoing information about the authentication algorithm supported by the UE; or when the MME needs to learn the information about the authentication algorithm supported by the UE, the MME may send a request message to the UE, to request the UE to send, to the MME, the information about the authentication algorithm supported by the UE, and after receiving the request sent by the MME, the UE may send a response message to the MME, and send, to the MME by using the foregoing response message, the information about the authentication algorithm supported by the UE. This embodiment of the present invention sets no limitation on a sending manner in which the UE sends, to the MME, the information about the authentication algorithm supported by the UE, and the foregoing sending manner in which the information about the authentication algorithm supported by the UE is sent to the MME by using the request message or the response message is merely exemplary rather than exhaustive. In this embodiment of the present invention, the sending manner in which the information about the authentication algorithm supported by the UE is sent to the MME by using the request message is used as an example for detailed description. In specific implementation, the request message sent to the MME by the sending module 50 of the UE may be an Attach request, or a TAU request, or a Registration request, or the like, and this embodiment of the present invention sets no limitation on a message type of the foregoing request message. In the request message sent to the MME by the UE, the information about the authentication algorithm supported by the UE may be added to the foregoing request message and sent to the MME. In specific implementation, when the UE supports authentication algorithm selection (that is, the UE can support a Tuak algorithm and a Milenage algorithm), when sending the request message to the MME, the sending module 50 of the UE may add the information about the authentication algorithm supported by the UE (including the Tuak algorithm or the Milenage algorithm) to the foregoing request message to send to the MME, as shown in FIG. 2 or FIG. 3, that is, in this case, the request message sent to the MME by the sending module 50 of the UE carries information about the Tuak algorithm or the Milenage algorithm supported by the UE; when the UE does not support authentication algorithm selection (that is, the UE supports only the Milenage algorithm), when sending the request message to the MME, the sending module 50 of the UE does not send, to the MME, the information about the authentication algorithm supported by the UE, that is, in this case, the information, carried in the request message sent to the MME by the sending module 50 of the UE, about the authentication algorithm supported by the UE is empty. In specific implementation, for the foregoing specific implementation process in which the sending module of the UE sends the request message to the MME, refer to step S201 in the second embodiment for selecting an authentication algorithm provided in the embodiments of the present invention, and details are not described herein again.

In some feasible implementation manners, the information that is about the authentication algorithm supported by the user equipment and is sent by the foregoing sending module 50 includes: a Tuak algorithm supported by the user equipment, and/or a Milenage algorithm supported by the user equipment; and
the processing module 70 is specifically configured to:
parse the user authentication request message, to acquire identification information that is of an authentication algorithm and is included in the user authentication request message; and
determine the authentication algorithm according to the identification information.

In some feasible implementation manners, the user authentication request message received by the foregoing receiving module 60 includes an authentication parameter used to authenticate the user equipment;
the authentication parameter that is used to authenticate the user equipment and is received by the foregoing receiving module 60 includes an AUTN parameter, and the AUTN parameter includes an AMF parameter; and
the identification information of the authentication algorithm includes: a first identifier or a second identifier of a flag bit that is of the authentication algorithm and is included in the AMF parameter.

The foregoing processing module 70 is specifically configured to:
when the identification information is the first identifier of the flag bit, in the AMF parameter, of an authentication algorithm used to authenticate the user equipment, set the Tuak algorithm supported by the user equipment as the authentication algorithm; or
when the identification information is the second identifier of the flag bit, in the AMF parameter, of an authentication algorithm used to authenticate the user equipment, set the Milenage algorithm supported by the user equipment as the authentication algorithm.

In some feasible implementation manners, the information, sent by the foregoing sending module 50, about the authentication algorithm supported by the user equipment is empty; and
the processing module 70 is specifically configured to:
set, according to the user authentication request message, a Milenage algorithm supported by the user equipment as the authentication algorithm.

In some feasible implementation manners, after the sending module 50 of the UE sends the request message to the MME, the MME may send, according to the request message sent by the UE, an authentication data request message to an HSS. After receiving the authentication data request message sent by the MME, the HSS may select, according to the foregoing authentication data request message, the authentication algorithm used to authenticate the UE, and set the identification information of the foregoing authentication algorithm according to the selected authentication algorithm, and determine an authentication vector used to authenticate the UE, and further send, to the UE by using the MME, the authentication vector that includes the identification information of the foregoing authentication algorithm. After receiving the identification information that is of the authentication algorithm used to authenticate the UE and is sent by the HSS, the MME may save the foregoing identification information (which may be specifically the authentication vector used to authenticate the UE) of the authentication algorithm used to authenticate the UE, and send, to the UE by sending the user authentication request to the UE, the foregoing identification information of the authentication algorithm used to authenticate the UE. After the receiving module 60 of the UE receives the user authentication request message sent by the MME, the processing module 70 may determine, according to the user authentication request message received by the foregoing receiving module 60, the authentication algorithm used to authenticate the UE by the network, and further determine, according to the authentication algorithm used to authenticate the UE by the network, the authentication algorithm used to authenticate the network by the UE, and perform authentication on the network according to the foregoing determined authentication algorithm used to authenticate the network. The foregoing user authentication request message that is received by the receiving module 60 of the UE and is sent by the MME includes the authentication parameter used to authenticate the UE, that is, includes a parameter in the authentication vector that is used to authenticate the UE and is determined by the HSS according to the request message sent by the UE, including an AUTN parameter, a RAND parameter, and the like.

In some feasible implementation manners, when the UE supports authentication algorithm selection, after the sending module 50 of the UE adds the information about the authentication algorithm supported by the UE to the request message to send to the MME, when the receiving module 60 of the UE receives the user authentication request message from the MME, the processing module 70 may parse the user authentication request message received by the foregoing receiving module 60, to acquire, from the foregoing authentication parameter included in the foregoing user authentication request message, the identification information of the authentication algorithm used to authenticating the UE. In specific implementation, when the HSS supports authentication algorithm selection, and when the authentication data request message received from the MME by the HSS carries the information about the authentication algorithm supported by the UE, the HSS may determine, according to the authentication algorithm supported by the UE and an authentication algorithm supported by the HSS, the authentication algorithm used to authenticate the UE, set, in a preset AMF parameter, the identification information of the selected authentication algorithm, and obtain, by calculation according to the foregoing AMF parameter that includes the identification information of the authentication algorithm, the authentication vector used to authenticate the UE. After the HSS determines the foregoing authentication vector, the authentication parameter that is in the foregoing authentication vector and is used to authenticate the UE may be sent to the UE by using the MME.

After the receiving module 60 of the UE receives the user authentication request sent by the MME, the processing module 70 may parse the foregoing user authentication request message, to acquire, from the authentication parameter included in the foregoing user authentication request message, the identification information of the authentication algorithm used to authenticate the UE by the network, where the foregoing identification information of the authentication algorithm used to authenticate the UE by the network includes: the first identifier (for example, 1) or the second identifier (for example, 0) of the flag bit (that is, the X^{th} bit of the foregoing AMF parameter) that is in the foregoing AMF parameter and is used to authenticate the UE. As shown in FIG. 2, after the receiving module 60 of the UE receives the user authentication request message sent by the MME, the processing module 70 may analyze the X^{th} bit of the AMF parameter in the foregoing user authentication request message, acquire the identification information (including 0 or 1) of the authentication algorithm from the X^{th} bit of the foregoing AMF parameter, and determine, according to the acquired identification information, the authentication algorithm used to authenticate the UE by the network, and further determine the authentication algorithm (which is kept consistent with the authentication algorithm used to authenticate the UE by the network) used to authenticate the network by the UE. For example, when learning from the foregoing AMF parameter that a value of the X^{th} bit of the AMF parameter is 1 (that is, the first identifier), the processing module 70 of the UE may determine that the authentication algorithm used to authenticate the UE by the network is the Tuak algorithm, and after determining the authentication algorithm used to authenticate the UE by the network, the processing module 70 may determine that the authentication algorithm used to authenticate the network by the UE is the Tuak algorithm Tuak; when learning from the foregoing AMF parameter that a value of the X^{th} bit of the AMF parameter is 0 (that is, the second identifier), the processing module 70 may determine that the authentication algorithm used to authenticate the UE by the network is the Milenage algorithm, and after determining the authentication algorithm used to authenticate the UE by the network, the processing module 70 may determine that the authentication algorithm used to authenticate the network by the UE is the Milenage algorithm.

In some feasible implementation manners, when the UE does not support authentication algorithm selection, the information, carried in the request message sent to the MME by the sending module 50 of the UE, about the authentication algorithm supported by the UE is empty, and the information, carried in the authentication data request message received by the HSS from the MME, about the authentication algorithm supported by the UE is also empty. In this case, the HSS selects a default authentication algorithm (the Milenage algorithm), and the identification information that is of the authentication algorithm used to authenticate the UE and is included in the authentication vector determined by the HSS according to the selected authentication algorithm is the second identifier (0) of the X^{th} bit of the AMF parameter, as shown in FIG. 4. After the receiving module 60 of the UE receives the user authentication request sent by the MME, the processing module 70 determines, according to the default authentication algorithm (the Milenage algorithm), the authentication algorithm used to authenticate the network, that is, in this case, the authentication algorithm used to authenticate the UE by the network and the authentication algorithm used to authenticate the network by the UE are both the Milenage algorithm. In specific implementation, after determining the authentication algorithm used to authenticate the network, the processing module 70 may send, to the MME by using a user authentication response, information about the foregoing authentication algorithm used to authenticate the network, so that the authentication on the UE by the network is completed by using the MME, allowing the UE to access the network. In specific implementation, for the foregoing specific implementation process in which after receiving, from the MME, information included in the request message sent by the UE, the foregoing HSS determines, according to the foregoing information, the authentication algorithm used to authenticate the UE and the authentication vector, and sends information such as the foregoing authentication vector to the UE by using the MME, refer to the first embodiment for selecting an authentication algorithm provided in the embodiments of the present invention, and details are not described herein again.

In specific implementation, for the foregoing specific implementation process in which the receiving module and the processing module of the UE receive the user authentication request sent by the MME, and determine, according to the foregoing received user authentication request, the authentication algorithm used to authenticate the network, refer to steps S202 and S203 in the second embodiment for selecting an authentication algorithm provided in the embodiments of the present invention, and details are not described herein again.

If UE described in this embodiment of the present invention supports authentication algorithm selection, the UE may send, to an MME by using a request message, an authentication algorithm supported by the UE, and may further acquire, according to a user authentication request sent by the MME, information about an authentication algorithm used to authenticate the UE by a network, and further set the authentication algorithm used to authenticate the UE by the network as an authentication algorithm used to authenticate the network by the UE; if the UE does not support authentication algorithm selection, the UE sends a request message to the MME, and after receiving the request message sent by the UE, the network selects a default Milenage algorithm as the authentication algorithm used to authenticate the UE, and after receiving the user authentication request sent by the MME, the UE may set the default Milenage algorithm as the authentication algorithm used to authenticate the network, thereby implementing uniformity of the authentication algorithms, so that the authentication on the UE is completed by using the MME, allowing the UE to access the network. In this embodiment of the present invention, diversity of choices of authentication algorithms used to authenticate the UE is improved, resource utilization of a terminal is improved, and user experience of UE authentication is enhanced.

Referring to FIG. 12, FIG. 12 is a schematic structural diagram of an embodiment of a control device for selecting an authentication algorithm according to an embodiment of the present invention. The control device described in this embodiment includes:
a receiving module 80, configured to receive information that is sent by a user equipment and is about an authentication algorithm supported by the user equipment; and
a sending module 90, configured to send an authentication data request message to a serving device, where the authentication data request message carries the information about the authentication algorithm supported by the user equipment.

The receiving module 80 is configured to receive identification information that is of an authentication algorithm and is sent by the serving device, where the identification information of the authentication algorithm is corresponding to the authentication data request message.

The sending module 90 is configured to send a user authentication request message to the user equipment, where the user authentication request message carries the identification information of the authentication algorithm.

In some feasible implementation manners, the information that is about the authentication algorithm supported by the user equipment and is received by the foregoing receiving module 80 includes: a Tuak algorithm supported by the user equipment, and/or a Milenage algorithm supported by the user equipment, or the information about the authentication algorithm supported by the user equipment is empty.

In some feasible implementation manners, the identification information that is of the authentication algorithm and is received by the foregoing receiving module 80 includes: identification information corresponding to the Tuak algorithm selected by the serving device, and/or identification information corresponding to the Milenage algorithm selected by the serving device, or the information about the authentication algorithm supported by the user equipment is empty.

In some feasible implementation manners, when the UE needs to send, to an MME, the information about the authentication algorithm supported by the UE, the UE may send a request message to the MME, and send, to the MME by using the foregoing request message, the foregoing information about the authentication algorithm supported by the UE; or when the MME needs to learn the information about the authentication algorithm supported by the UE, the MME may send a request message to the UE, to request the UE to send, to the MME, the information about the authentication algorithm supported by the UE, and after receiving the request sent by the MME, the UE may send a response message to the MME, and send, to the MME by using the foregoing response message, the information about the authentication algorithm supported by the UE. This embodiment of the present invention sets no limitation on a sending manner in which the UE sends, to the MME, the information about the authentication algorithm supported by the UE, and the foregoing sending manner in which the information about the authentication algorithm supported by the UE is sent to the MME by using the request message or the response message is merely exemplary rather than exhaustive. In this embodiment of the present invention, the sending manner in which the information about the authentication algorithm supported by the UE is sent to the MME by using the request message is used as an example for detailed description. In specific implementation, the request message that is sent by the UE and is received by the receiving module 80 of the MME from the UE may carry the information about the authentication algorithm supported by the UE, including: the Tuak algorithm supported by the UE, or the Milenage algorithm supported by the UE, or the information about the authentication algorithm supported by the UE is empty. That is, when the UE supports authentication algorithm selection (that is, the UE supports the Tuak algorithm and the Milenage algorithm), when sending the request message to the MME, the UE may send, to the MME by using the foregoing request message, the information about the authentication algorithm supported by the UE; when the UE does not support authentication algorithm selection (that is, the UE supports only the Milenage algorithm), the information, carried in the request message sent to the MME by the UE, about the authentication algorithm supported by the UE is empty. After the receiving module 80 of the MME receives the request message sent by the UE, the sending module 90 may send, according to the request message received by the foregoing receiving module 80, the authentication data request message to an HSS. When the request message sent by the UE carries the information about the authentication algorithm supported by the UE, when sending the authentication data request message to the HSS, the sending module 90 of the MME may send, to the HSS by using the foregoing authentication data request message, the foregoing information about the authentication algorithm supported by the UE; when the information, carried in the request message sent by the UE, about the authentication algorithm supported by the UE is empty, when the sending module 90 of the MME sends the authentication data request message to the HSS, the information, carried in the foregoing authentication data request message, about the authentication algorithm supported by the UE is empty.

In some feasible implementation manners, when the sending module 90 of the MME sends the authentication data request message to the HSS, the HSS may determine, according to the foregoing authentication data request message, the authentication algorithm used to authenticate the UE, and obtain, by calculation according to the foregoing determined authentication algorithm, an authentication vector used to authenticate the UE. After determining, according to the authentication data request message sent by the MME, the authentication algorithm used to authenticate the UE, and determining, according to the foregoing authentication algorithm, the authentication vector used to authenticate the UE, the HSS may send the foregoing authentication vector to the MME by using an authentication data response message. After receiving, by using the receiving module 80, the authentication data response message sent by the HSS, the MME may save the authentication vector included in the foregoing authentication data response message, and further send, by using the sending module 90, the user authentication request message to the UE, and send, to the UE, an authentication parameter that is used to authenticate the UE and is included in the foregoing authentication vector used to authenticate the UE, as shown in FIG. 2, FIG. 3 or FIG. 4. After receiving the user authentication request message sent by the MME, the UE may acquire, from the user authentication request message, information such as the authentication parameter used to authenticate the UE by a network, and further determine, according to the foregoing authentication parameter, an authentication algorithm used to authenticate the network. In specific implementation, for the foregoing specific implementation process in which the HSS determines, according to the authentication data request message sent by the MME, the authentication algorithm used to authenticate the UE and the authentication vector, and sends information such as the foregoing authentication vector to the MME by using the authentication data response message, refer to the first embodiment of the method for selecting an authentication algorithm provided in the embodiments of the present invention, and details are not described herein again. For the foregoing specific implementation process in which the UE sends the request message to the MME, and determines, according to the user authentication request sent by the MME, the authentication algorithm used to authenticate the network, refer to the second embodiment of the method for selecting an authentication algorithm provided in the embodiments of the present invention, and details are not described herein again. In some feasible implementation manners, when the MME supports saving and forwarding of the information about the authentication algorithm supported by the UE, if the request message sent to the MME by the UE carries the information about the authentication algorithm supported by the UE (that is, the UE supports the Tuak algorithm and the Milenage algorithm), after receiving the request message sent by the UE, the receiving module 80 of the MME may save the information about the authentication algorithm supported by the UE, and the sending module 90 sends, to the HSS by using the authentication data request message, the foregoing information about the authentication algorithm supported by the UE, as shown in FIG. 2 or FIG. 3; if the information, carried in the request message sent to the MME by the UE, about the authentication algorithm supported by the UE is empty, after the receiving module 80 of the MME receives the foregoing request message, the sending module 90 may send the authentication data request message to the HSS, where the information, carried in the foregoing authentication data request message, about the authentication algorithm supported by the UE is empty, as shown in FIG. 4. When the MME does not support saving and forwarding of the information about the authentication algorithm supported by the UE, if the request message sent to the MME by the UE carries the information about the authentication algorithm supported by the UE (that is, the UE supports the Tuak algorithm and the Milenage algorithm), after receiving, by using the receiving module 80, the request message sent by the UE, the MME cannot save the information about the authentication algorithm supported by the UE, and in this case, when the sending module 90 of the MME sends the authentication data request message to the HSS, the information, carried in the foregoing authentication data request message, about the authentication algorithm supported by the UE is empty, as shown in FIG. 7 or FIG. 8; if the information, carried in the request message sent to the MME by the UE, about the authentication algorithm supported by the UE is empty, after the receiving module 80 of the MME receives the request message sent by the UE, the sending module 90 may send the authentication data request message to the HSS, where the information, carried in the foregoing authentication data request message, about the authentication algorithm supported by the UE is empty, as shown in FIG. 9. In specific implementation, for a specific implementation process of the control device described in this embodiment of the present invention, refer to steps S301 to S304 in the third embodiment of the method for selecting an authentication algorithm provided in the embodiments of the present invention, and details are not described herein again.

In some feasible implementation manners, after sending the user authentication request message to the UE, the MME may further acquire a user authentication response message from the UE, and complete the authentication on the UE according to the authentication vector that is used to authenticate the UE and is sent by the HSS and saved by the MME, allowing the UE to access the network.

In this embodiment of the present invention, an MME may receive a request message sent by UE, send an authentication data request message to an HSS according to the request message sent by the UE, and acquire, from the HSS, information such as an authentication vector that is used to authenticate the UE and is determined by the HSS according to the foregoing authentication data request message, and further send a user authentication request to the UE, and send, to the UE, the foregoing information such as the authentication vector that is used to authenticate the UE and is determined by the HSS, so that the UE determines an authentication algorithm used to authenticate a network by the UE; the MME may further acquire a user authentication response message from the UE, and complete, with reference to the information such as the authentication vector that is used to authenticate the UE and is sent by the HSS, authentication on the UE for accessing the network, thereby allowing the UE to access the network; in addition, the MME may further send the authentication data request message to the HSS according to its own configurations (that is, whether saving and forwarding of information about an authentication algorithm supported by the UE are supported), which enriches diversity of authentication algorithms used to authenticate the UE, improves terminal utilization of UE authentication, and enhances user experience of the UE authentication.

Referring to FIG. 13, FIG. 13 is a schematic structural diagram of an embodiment of a system for selecting an authentication algorithm according to an embodiment of the present invention. The system for selecting an authentication algorithm described in this embodiment includes:
the foregoing user equipment 100 for selecting an authentication algorithm provided in the embodiments of the present invention, the foregoing control device 200 for selecting an authentication algorithm provided in the embodiments of the present invention, and the foregoing serving device 300 for selecting an authentication algorithm provided in the embodiments of the present invention. In specific implementation, for a specific interaction process in a process in which the user equipment 100, the control device 200, and the serving device 300 select an authentication algorithm, refer to specific implementation processes described in the first embodiment, the second embodiment, and the third embodiment of the method for selecting an authentication algorithm provided in the embodiments of the present invention, and details are not described herein again.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (Read-Only Memory, ROM), a random access memory (Random Access Memory, RAM), or the like.

What is disclosed above is merely exemplary embodiments of the present invention, and certainly is not intended to limit the protection scope of the present invention. Therefore, equivalent variations made in accordance with the claims of the present invention shall fall within the scope of the present invention.

## Claims

1. A method for selecting an authentication algorithm, comprising:
receiving, by a serving device, an authentication data request message sent by a control device, wherein the authentication data request message carries information about an authentication algorithm supported by a user equipment;
selecting, by the serving device, an authentication algorithm according to the authentication data request message and information about an authentication algorithm supported by the serving device;
determining, by the serving device, identification information of the authentication algorithm according to the selected authentication algorithm; and
sending, by the serving device, the identification information of the authentication algorithm to the control device, so that the control device sends the identification information of the authentication algorithm to the user equipment.

2. The method according to claim 1, wherein the identification information that is of the authentication algorithm and is carried in the authentication data request message comprises: a Tuak algorithm supported by the user equipment, and/or a Milenage algorithm supported by the user equipment; and
the selecting, by the serving device, an authentication algorithm according to the authentication data request message and information about an authentication algorithm supported by the serving device comprises:
selecting, by the serving device from the authentication algorithm supported by the user equipment and the authentication algorithm supported by the serving device, an authentication algorithm supported by both the user equipment and the serving device, and setting the authentication algorithm as the selected authentication algorithm; wherein
the authentication algorithm supported by the serving device comprises: the Tuak algorithm, and/or the Milenage algorithm.

3. The method according to claim 1, wherein the information, carried in the authentication data request message, about the authentication algorithm supported by the user equipment is empty;
the information about the authentication algorithm supported by the serving device comprises: a Tuak algorithm supported by a serving terminal, and/or a Milenage algorithm supported by the serving terminal; and
the selecting, by the serving device, an authentication algorithm according to the authentication data request message and information about an authentication algorithm supported by the serving device comprises:
selecting, by the serving device, the Milenage algorithm from the authentication algorithm supported by the serving device, and setting the Milenage algorithm as the selected authentication algorithm.

4. The method according to claim 1, wherein the identification information of the authentication algorithm is specifically an authentication vector used to authenticate the user equipment; and
when the serving device sets the Tuak algorithm as the selected authentication algorithm, the determining, by the serving device, identification information of the authentication algorithm according to the selected authentication algorithm comprises:
selecting, by the serving device from a preset authentication management field AMF parameter, a flag bit of an authentication algorithm used to authenticate the user equipment, and setting the flag bit to a first identifier, wherein the first identifier is used as identification information of the Tuak algorithm; and
generating, by the serving device according to the AMF parameter and the Tuak algorithm, the authentication vector used to authenticate the user equipment.

5. The method according to claim 2 or 3, wherein the identification information of the authentication algorithm is specifically an authentication vector used to authenticate the user equipment; and
when the serving device sets the Milenage algorithm as the selected authentication algorithm, the determining, by the serving device, identification information of the authentication algorithm according to the selected authentication algorithm comprises:
selecting, by the serving device from a preset AMF parameter, a flag bit of an authentication algorithm used to authenticate the user equipment, and setting the flag bit to a second identifier, wherein the second identifier is used as identification information of the Milenage algorithm; and
generating, by the serving device according to the AMF parameter and the Milenage algorithm, the authentication vector used to authenticate the user equipment.

6. A method for selecting an authentication algorithm, comprising:
sending, by a user equipment to a control device, information about an authentication algorithm supported by the user equipment;
receiving, by the user equipment, a user authentication request message sent by the control device; and
determining, by the user equipment, an authentication algorithm according to the user authentication request message, and performing authentication on the network according to the authentication algorithm.

7. The method according to claim 6, wherein the information about the authentication algorithm supported by the user equipment comprises: a Tuak algorithm supported by the user equipment, and/or a Milenage algorithm supported by the user equipment; and
the determining, by the user equipment, an authentication algorithm according to the user authentication request message comprises:
parsing, by the user equipment, the user authentication request message, to acquire identification information that is of an authentication algorithm and is comprised in the user authentication request message; and
determining, by the user equipment, the authentication algorithm according to the identification information.

8. The method according to claim 7, wherein the user authentication request message comprises an authentication parameter used to authenticate the user equipment, wherein
the authentication parameter used to authenticate the user equipment comprises an AUTN parameter, and the AUTN parameter comprises an AMF parameter; and
the identification information of the authentication algorithm comprises: a first identifier or a second identifier of a flag bit that is of the authentication algorithm and is comprised in the AMF parameter.

9. The method according to claim 8, wherein the determining, by the user equipment, the authentication algorithm according to the identification information comprises:
setting, by the user equipment, the Tuak algorithm supported by the user equipment as the authentication algorithm when the identification information is the first identifier of the flag bit, in the AMF parameter, of an authentication algorithm used to authenticate the user equipment; or
setting, by the user equipment, the Milenage algorithm supported by the user equipment as the authentication algorithm when the identification information is the second identifier of the flag bit, in the AMF parameter, of an authentication algorithm used to authenticate the user equipment.

10. The method according to claim 6, wherein the information about the authentication algorithm supported by the user equipment is empty; and
the determining, by the user equipment, an authentication algorithm according to the user authentication request message comprises:
setting, by the user equipment according to the user authentication request message, a Milenage algorithm supported by the user equipment as the authentication algorithm.

11. A method for selecting an authentication algorithm, comprising:
receiving, by a control device, information that is sent by a user equipment and is about an authentication algorithm supported by the user equipment;
sending, by the control device, an authentication data request message to a serving device, wherein the authentication data request message carries the information about the authentication algorithm supported by the user equipment;
receiving, by the control device, identification information that is of an authentication algorithm and is sent by the serving device, wherein the identification information of the authentication algorithm is corresponding to the authentication data request message; and
sending, by the control device, a user authentication request message to the user equipment, wherein the user authentication request message carries the identification information of the authentication algorithm.

12. The method according to claim 11, wherein the information about the authentication algorithm supported by the user equipment comprises: a Tuak algorithm supported by the user equipment, and/or a Milenage algorithm supported by the user equipment, or the information about the authentication algorithm supported by the user equipment is empty.

13. The method according to claim 11 or 12, wherein the identification information that is of the authentication algorithm and is sent by the serving device comprises: identification information corresponding to the Tuak algorithm selected by the serving device, and/or identification information corresponding to the Milenage algorithm selected by the serving device, or the information about the authentication algorithm supported by the user equipment is empty.

14. A serving device for selecting an authentication algorithm, comprising:
a receiving module, configured to receive an authentication data request message sent by a control device, wherein the authentication data request message carries information about an authentication algorithm supported by a user equipment;
a selection module, configured to select an authentication algorithm according to the authentication data request message received by the receiving module and information about an authentication algorithm supported by the serving device;
a processing module, configured to determine identification information of the authentication algorithm according to the authentication algorithm selected by the selection module; and
a sending module, configured to send the identification information of the authentication algorithm to the control device, so that the control device sends the identification information of the authentication algorithm to the user equipment.

15. The serving device according to claim 14, wherein the identification information that is of the authentication algorithm and is carried in the authentication data request message received by the receiving module comprises: a Tuak algorithm supported by the user equipment, and/or a Milenage algorithm supported by the user equipment; and
the selection module is specifically configured to:
select, from the authentication algorithm supported by the user equipment and the authentication algorithm supported by the serving device, an authentication algorithm supported by both the user equipment and the serving device, and set the authentication algorithm as the selected authentication algorithm; wherein
the authentication algorithm supported by the serving device comprises: the Tuak algorithm, and/or the Milenage algorithm.

16. The serving device according to claim 15, wherein the information, carried in the authentication data request message received by the receiving module, about the authentication algorithm supported by the user equipment is empty;
the information about the authentication algorithm supported by the serving device comprises: the Tuak algorithm supported by the serving device, and/or the Milenage algorithm supported by the serving device; and
the selection module is specifically configured to:
select, by the serving device, the Milenage algorithm from the authentication algorithm supported by the serving device, and set the Milenage algorithm as the selected authentication algorithm.

17. The serving device according to claim 15, wherein the identification information that is of the authentication algorithm and is determined by the processing module is specifically an authentication vector used to authenticate the user equipment; and
when the selection module sets the Tuak algorithm as the selected authentication algorithm, the processing module is specifically configured to:
select, from a preset AMF parameter, a flag bit of an authentication algorithm used to authenticate the user equipment, and set the flag bit to a first identifier, wherein the first identifier is used as identification information of the Tuak algorithm; and
generate, according to the AMF parameter and the Tuak algorithm, the authentication vector used to authenticate the user equipment.

18. The serving device according to claim 15 or 16, wherein the identification information that is of the authentication algorithm and is determined by the processing module is specifically an authentication vector used to authenticate the user equipment; and
when the selection module sets the Milenage algorithm as the selected authentication algorithm, the processing module is specifically configured to:
select, from a preset AMF parameter, a flag bit of an authentication algorithm used to authenticate the user equipment, and set the flag bit to a second identifier, wherein the second identifier is used as identification information of the Milenage algorithm; and
generate, according to the AMF parameter and the Milenage algorithm, the authentication vector used to authenticate the user equipment.

19. User equipment for selecting an authentication algorithm, comprising:
a sending module, configured to send, to a control device, information about an authentication algorithm supported by the user equipment;
a receiving module, configured to receive a user authentication request message sent by the control device; and
a processing module, configured to: determine an authentication algorithm according to the user authentication request message, and perform authentication on the network according to the authentication algorithm.

20. The user equipment according to claim 19, wherein the information that is about the authentication algorithm supported by the user equipment and is sent by the sending module comprises: a Tuak algorithm supported by the user equipment, and/or a Milenage algorithm supported by the user equipment; and
the processing module is specifically configured to:
parse the user authentication request message, to acquire identification information that is of an authentication algorithm and is comprised in the user authentication request message; and
determine the authentication algorithm according to the identification information.

21. The user equipment according to claim 20, wherein the user authentication request message received by the receiving module comprises an authentication parameter used to authenticate the user equipment;
the authentication parameter that is used to authenticate the user equipment and is received by the receiving module comprises an AUTN parameter, and the AUTN parameter comprises an AMF parameter; and
the identification information of the authentication algorithm comprises: a first identifier or a second identifier of a flag bit that is of the authentication algorithm and is comprised in the AMF parameter.

22. The user equipment according to claim 21, wherein the processing module is specifically configured to:
set the Tuak algorithm supported by the user equipment as the authentication algorithm when the identification information is the first identifier of the flag bit, in the AMF parameter, of an authentication algorithm used to authenticate the user equipment; or
set the Milenage algorithm supported by the user equipment as the authentication algorithm when the identification information is the second identifier of the flag bit, in the AMF parameter, of an authentication algorithm used to authenticate the user equipment.

23. The user equipment according to claim 19, wherein the information, sent by the sending module, about the authentication algorithm supported by the user equipment is empty; and
the processing module is specifically configured to:
set, according to the user authentication request message, a Milenage algorithm supported by the user equipment as the authentication algorithm.

24. A control device for selecting an authentication algorithm, comprising:
a receiving module, configured to receive information that is sent by a user equipment and is about an authentication algorithm supported by the user equipment; and
a sending module, configured to send an authentication data request message to a serving device, wherein the authentication data request message carries the information about the authentication algorithm supported by the user equipment; wherein
the receiving module is configured to receive identification information that is of an authentication algorithm and is sent by the serving device, wherein the identification information of the authentication algorithm is corresponding to the authentication data request message; and
the sending module is configured to send a user authentication request message to the user equipment, wherein the user authentication request message carries the identification information of the authentication algorithm.

25. The control device according to claim 24, wherein the information that is about the authentication algorithm supported by the user equipment and is received by the receiving module comprises: a Tuak algorithm supported by the user equipment, and/or a Milenage algorithm supported by the user equipment, or the information about the authentication algorithm supported by the user equipment is empty.

26. The control device according to claim 24 or 25, wherein the identification information that is of the authentication algorithm and is received by the receiving module comprises: identification information corresponding to the Tuak algorithm selected by the serving device, and/or identification information corresponding to the Milenage algorithm selected by the serving device, or the identification information that is of the authentication algorithm and is received by the receiving module is empty.

27. A system for selecting an authentication algorithm, comprising: the serving device according to claims 14 to 18, the user equipment according to claims 19 to 23, and the control device according to claims 24 to 26.
